# EUROPEAN PATENT APPLICATION

(11) **EP 4 595 840 A1**
(43) Date of publication of application: **06.08.2025**
(21) Application number: 25155064.6
(22) Date of filing: 30.01.2025
(51) Int. Cl.: A47J 37/06

(54) **AIR FRYER WITH AIR SUCTION ON SIDE PORTION**

(30) Priority: 02.02.2024 CN 202420255741 U; 02.02.2024 CN 202420254780 U; 02.02.2024 CN 202410148178; 02.02.2024 CN 202420254402 U
(71) Applicant: Ningbo Careline Electric Appliance Co., Ltd., Ningbo, Zhejiang 315000 (CN)
(72) Inventor: ZHANG, Yichi, Ningbo City 315000 (CN); BAI, Rongjie, Ningbo City 315000 (CN); HUANG, Chengzhou, Ningbo City 315000 (CN)
(74) Representative: Meyer-Dulheuer MD Legal Patentanwälte PartG mbB

(57) **Abstract**

The present application relates to an air fryer with air suction on a side portion. The air fryer includes a machine body, a cooking chamber arranged in the machine body, a hot air circulation system arranged on a side portion of the cooking chamber, communicating with the cooking chamber and used for delivering a circulating heat flow into the cooking chamber, and a frying basket arranged in the cooking chamber and having a top opening. A food tray with a through hole is suspended in the frying basket, a ventilation hole is formed in a side wall of the frying basket below the food tray, a hot air gap is formed between the frying basket and an inner wall of the cooking chamber, and the circulating heat flow generated by the hot air circulation system enters the cooking chamber, and then is adapted to enter the frying basket from the top opening of the frying basket, penetrate through the food tray from an upper space of the food tray to enter a lower space of the food tray, and then flow out of the ventilation hole. The air fryer heats food inside the frying basket in a manner of guiding air out from the side portion, which can not only avoid food burning, but also can heat upper and lower surfaces of the food simultaneously, thereby improving cooking efficiency.

## Description

### CROSS-REFERENCE TO RELATED APPLICATION

The present disclosure claims the priority of the Chinese patent application No. 2024202557413 filed to the China Patent Office on February 2, 2024, and entitled "Air Fryer with Air Suction on Side Portion"; the priority of the Chinese patent application No. 2024202547801 filed to the China Patent Office on February 2, 2024, and entitled "Drawer-type Frying Basket Component and Air Fryer"; the priority of the Chinese patent application No. 2024101481784 filed to the China Patent Office on February 2, 2024, and entitled "Novel Frying Basket Component and Air Fryer"; and the priority of the Chinese patent application No. 2024202544023 filed to the China Patent Office on February 2, 2024, and entitled "Three-dimensional Heating-type Air Fryer", of which the entire contents are incorporated herein by reference.

### TECHNICAL FIELD

The present disclosure relates to the technical field of kitchen household appliances and cooking appliances, in particular to an air fryer with air suction on a side portion.

### BACKGROUND

With the improvement of people's living standards, people's requirements for food are also increasing, and an oil-free cooking manner of an air fryer is also getting more and more favored. In a traditional air fryer, an air frying system of most of the air fryers is arranged at a top of a cooking chamber, and a circulating heat flow generated by the air frying system is suitable for being blown into a frying basket from a top opening of the frying basket, thereby heating food inside the frying basket. By arranging the air frying system at the top of the cooking chamber, the circulating heat flow generated by the air frying system is directly blown into the frying basket from the top opening of the frying basket. Although heating efficiency can be improved, it can also be prone to causing food burning and uneven heating of upper and lower surfaces of the food, and a flip operation is required, which is not only complicated in operation, but also poor in cooking effect and is poor in use experience of a user.

### SUMMARY

The present application provides an air fryer with air suction on a side portion. The air fryer includes a machine body, a cooking chamber arranged in the machine body and a frying basket arranged in the cooking chamber and having a top opening. A hot air chamber is formed in a side portion of the cooking chamber, the hot air chamber is internally provided with a hot air circulation system for generating a circulating heat flow, an air suction hole corresponding to the hot air circulation system is formed in a middle of a side wall of one side of the cooking chamber adjacent to the hot air circulation system, and an air outlet communicating with the hot air chamber is formed in an upper portion of the side wall of one side of the cooking chamber adjacent to the hot air circulation system; and a food tray with a through hole is suspended in the frying basket, a ventilation hole is formed in a side wall of the frying basket below the food tray, a hot air gap is formed between the frying basket and an inner wall of the cooking chamber, and the circulating heat flow generated by the hot air circulation system flows out of the air outlet and then is adapted to enter the frying basket from the top opening of the frying basket, penetrates through the food tray from an upper space of the food tray to enter a lower space of the food tray and then flows out of the ventilation hole, and flows back to the hot air chamber through the hot air gap and the air suction hole.

Further, a downward sunken accommodating groove is formed in a middle of the food tray, a side portion of the accommodating groove is of a closed structure, a plurality of through holes are formed in a bottom of the accommodating groove, and the ventilation hole in the side wall of the frying basket at least partially corresponds to the side portion of the accommodating groove of the food tray.

Further, a downward sunken accommodating groove is formed in a middle of the food tray, a flow guiding part sunken into the frying basket and corresponding to the accommodating groove is arranged at a bottom of the frying basket, and the flow guiding part is adapted to extend in a direction from a middle of a bottom wall of the frying basket to an edge.

Further, a supporting structure matching the food tray is arranged on an inner side wall of the frying basket, and the food tray is adapted to be detachably suspended in the frying basket through the supporting structure.

Further, a blocking structure in movable fit with the ventilation hole is arranged at the ventilation hole, the blocking structure has a stressed state and a non-stressed state, and when the blocking structure is in the stressed state, the blocking structure is adapted to open the ventilation hole; and when the blocking structure is in the non-stressed state, the blocking structure is adapted to block the ventilation hole.

Further, the blocking structure includes a sealing element arranged in the frying basket and matching the ventilation hole, and a movable element connected with the sealing element, an installation hole matching the movable element is formed in the side wall of the frying basket, and the movable element is movably limited in the installation hole; one end of the movable element is connected to the sealing element, the other end of the movable element is provided with an abutting part extending to an exterior of the frying basket, and a position between the abutting part and an outer wall of the frying basket is sleeved with an elastic element; when the blocking structure is in the stressed state, the elastic element is compressed, and the movable element is adapted to drive the sealing element to move towards an interior of the frying basket, so as to open the ventilation hole; and when the blocking structure is in the non-stressed state, the movable element is adapted to drive the sealing element to move towards the exterior of the frying basket under the action of the elastic element, so as to block the ventilation hole.

Further, the frying basket includes a food tray, having an accommodating chamber with a top opening, wherein a through hole is formed in a bottom of the accommodating chamber; and an outer pot component, including a door baffle and an oil receiving tray arranged at a bottom of the door baffle and fixedly connected with the door baffle, wherein the food tray is detachably arranged on the door baffle, a lower portion of the food tray extends into the oil receiving tray, an airflow channel for allowing an airflow to pass through is formed between an outer wall of the food tray and an inner wall of the oil receiving tray, two ends of the airflow channel are adapted to communicate with the through hole and an outer space of the frying basket respectively, and the airflow channel communicates with an opening of the outer space of the frying basket to form the ventilation hole.

Further, a side wall of the food tray is of a closed structure, a sunken part formed by sinking into the accommodating chamber is arranged on a lower portion of the side wall of the food tray, and the sunken part extends into the oil receiving tray to form the airflow channel with the inner wall of the oil receiving tray.

Further, a handle extending towards an outer side is arranged at a top of the food tray, the handle is further provided with a limiting part, the door baffle is provided with a limiting groove matching the limiting part, and the food tray is adapted to be detachably arranged on the door baffle through the limiting part and the limiting groove.

Further, a supporting part protruding upward is arranged at a bottom of the inner wall of the oil receiving tray, the supporting part is adapted to abut against a bottom of the food tray, a protruding part extending downward and corresponding to the supporting part is arranged at the bottom of the food tray, the food tray is adapted to abut against the supporting part through the protruding part, a protective pad made of an elastic high-temperature resistant material is arranged on one or both of the supporting part and the protruding part, and the supporting part is adapted to abut against the protruding part through the protective pad; and a handle extending towards an outer side is arranged at a top of the food tray, the door baffle is provided with a receding groove to accommodate the handle, the supporting part is arranged at one end of the oil receiving tray away from the receding groove, and a connection line between at least one point in the receding groove and at least one point on the supporting part passes through a center line at a bottom of the oil receiving tray.

Further, a first heating component is arranged above the frying basket, and an airflow in the air outlet enters the cooking chamber and then is adapted to be heated by the first heating component and flow into the frying basket through the top opening of the frying basket; and a second heating component is arranged below the frying basket, and the second heating component is arranged in the hot air gap.

Further, an annular air guiding chamber sunken upward and having a downward opening is formed in a top of the cooking chamber, the air guiding chamber is adapted to communicate with the air outlet, the top opening of the frying basket is at least partially located under the air guiding chamber, and the first heating component is arranged in the air guiding chamber surrounding an inner wall of the air guiding chamber.

Further, a downward sunken heating groove is formed in a bottom of the cooking chamber, the second heating component is suspended in the heating groove, a plurality of fixing elements made of elastic high-temperature resistant materials are arranged in the heating groove at intervals, one ends of the fixing elements are provided with bending parts for fixing the second heating component, the other ends of the fixing elements are provided with fixed parts fixedly connected with a bottom wall of the heating groove through fasteners, the fixed parts are provided with a limiting part extending towards the bottom wall of the heating groove, a limiting hole matching the limiting part is arranged on the bottom wall of the heating groove, the limiting part is adapted to extend into the limiting hole, and a side wall of the heating groove is of an arc-shaped flow guiding structure extending obliquely in a direction from a bottom to an outer side of a top.

Further, an air suction plate is arranged on the side wall of one side of the cooking chamber adjacent to the hot air circulation system, a plurality of open pores are dispersed on the air suction plate to form the air suction hole, and the air suction hole at least partially corresponds to the ventilation hole in the side wall of the frying basket.

Further, a visible opening communicating with the cooking chamber is formed in a top of the machine body, the visible opening is internally provided with a visible window, and the visible window at least partially corresponds to the top opening of the frying basket; and a heating tube is arranged on the top of the cooking chamber, the heating tube is a light wave tube, and the heating tube is adapted to be arranged surrounding an outer edge of the visible opening.

### BRIEF DESCRIPTION OF THE DRAWINGS

In order to illustrate technical solutions in specific implementations of the present disclosure or the prior art more clearly, accompanying drawings needing to be used in description of the specific implementations or the prior art will be introduced below briefly. Apparently, the accompanying drawings in the description below are some implementations of the present disclosure, and those skilled in the art can further obtain other accompanying drawings according to these accompanying drawings without inventive efforts.
Fig. 1 is an overall sectional view of a drawer-type frying basket component and an air fryer in the present disclosure.
Fig. 2 is a schematic installation diagram of a drawer-type frying basket component in the present disclosure.
Fig. 3 is an overall sectional view of a first embodiment of an air fryer in the present disclosure.
Fig. 4 is a schematic breakdown diagram of a partial structure of a first embodiment of an air fryer in the present disclosure.
Fig. 5 is an overall sectional view of a second embodiment of an air fryer in the present disclosure.
Fig. 6 is a schematic breakdown diagram of a partial structure of a second embodiment of an air fryer in the present disclosure.
Fig. 7 is an overall sectional view of an air fryer in the present disclosure.
Fig. 8 is a schematic breakdown diagram of a frying basket structure of an air fryer in the present disclosure.
Fig. 9 is a schematic diagram of a partial structure of an air fryer in the present disclosure.
Fig. 10 is another overall sectional view of an air fryer in the present disclosure.
Fig. 11 is an overall schematic diagram of a frying basket component in the present disclosure.
Fig. 12 is a schematic diagram of state switching of a blocking structure of a frying basket component in the present disclosure.

### reference numerals:

1. Air fryer, 10. Machine body, 11. Cooking chamber, 111. Air outlet, 112. Air suction port, 12. Hot air chamber, 13. Hot air gap, 14. Air suction plate, 15. Visible opening, 151. Limiting hole, 16. Visible window, 161. Bending part, 162. Fixed part, 163. Limiting part, 17. Heating tube, 18. Air guiding chamber, 20. Hot air circulation system, 21. Food tray, 211. Ventilation hole, 212. Installation hole, 213. Elastic element limiting groove, 214. Accommodating groove, 22. Blocking structure, 221. Sealing element, 222. Movable element, 223. Elastic element, 224. Connecting element, 2211. Sealing part. 2221. Abutting part, 2222. First movable element, 2223. Second movable element, 23. Supporting structure, 24. Protective sleeve, 25. Flow guiding part, 27. Heat dissipation duct, 30. Frying basket component, 31. Frying basket, 32. Outer pot component, 33. Airflow channel, 331. Airflow outlet, 3311. Bottom opening, 3312. Mesh plate supporting structure, 332. Mesh plate, 333. Mesh plate hot air hole, 34. Handle, 311. Accommodation chamber, 312. Hot air hole, 313. Sunken part, 314. Protruding part, 321. Door baffle, 3211. Limiting groove, 3212. Receding groove, 322. Oil receiving tray, 3221. Supporting part, 341. Limiting part, 40. First heating component, 50. Second heating component, 515. Heating groove, and 516. Fixing element.

### DETAILED DESCRIPTION

The present application provides an air fryer with air suction on a side portion, so as to solve technical problems of complicated cooking operations, poor cooking effect, and poor use experience of a user of an existing air fryer.

In order to solve the above technical problems, an air fryer with air suction on a side portion is provided, and includes a machine body, a cooking chamber arranged in the machine body and a frying basket arranged in the cooking chamber and having a top opening. A hot air chamber is formed in a side portion of the cooking chamber, the hot air chamber is internally provided with a hot air circulation system for generating a circulating heat flow, an air suction hole corresponding to the hot air circulation system is formed in a middle of a side wall of one side of the cooking chamber adjacent to the hot air circulation system, and an air outlet communicating with the hot air chamber is formed in an upper portion of the side wall of one side of the cooking chamber adjacent to the hot air circulation system; and a food tray with a through hole is suspended in the frying basket, a ventilation hole is formed in a side wall of the frying basket below the food tray, a hot air gap is formed between the frying basket and an inner wall of the cooking chamber, and the circulating heat flow generated by the hot air circulation system flows out of the air outlet and then is adapted to enter the frying basket from the top opening of the frying basket, penetrates through the food tray from an upper space of the food tray to enter a lower space of the food tray and then flows out of the ventilation hole, and flows back to the hot air chamber through the hot air gap and the air suction hole. By arranging the hot air circulation system on the side portion of the cooking chamber to heat food inside the frying basket in a manner of guiding air out through the side portion, the present application can prevent the circulating heat flow generated by the hot air circulation system from being directly blown into the frying basket and resulting in situations such as food burning. At the same time, by arranging the ventilation hole in the side wall of the frying basket below the food tray, the circulating heat flow entering the frying basket penetrates through the food tray and then flows out of the ventilation hole, which can not only make the food on the food tray more evenly heated, but also can heat upper and lower surfaces of the food on the food tray, thereby avoiding a flipping operation and effectively improving cooking efficiency and a cooking effect.

In an optional embodiment, a downward sunken accommodating groove is formed in a middle of the food tray, a side portion of the accommodating groove is of a closed structure, and a plurality of through holes are formed in a bottom of the accommodating groove. By arranging the downward sunken accommodating groove in the middle of the food tray, not only the amount of food which can be loaded by the food tray can be increased, but an accommodating space above the food tray can also be effectively increased, thereby increasing the amount of cookable food of the frying basket and improving the cooking efficiency of the air fryer. At the same time, by arranging the side portion of the accommodating groove as the closed structure, the circulating heat flow flowing from the upper space of the food tray into the lower space of the food tray may be guided downward, penetrates through the food tray and then flows out of the ventilation hole, which can effectively improve a flowing speed of the circulating heat flow in the frying basket, thereby improving the cooking efficiency.

In an optional embodiment, the ventilation hole in the side wall of the frying basket at least partially corresponds to the side portion of the accommodating groove of the food tray. A position between the side wall of the frying basket and the side portion of the accommodating groove is adapted to form a flow guiding gap, and the flow guiding gap is adapted to guide the circulating heat flow below the food tray. By arranging the ventilation hole as corresponding to the side portion of the accommodating groove, the circulating heat flow below the food tray can flow out of the frying basket more smoothly through the ventilation hole, thereby improving circulation efficiency of the circulating heat flow inside the frying basket and improving the cooking efficiency of the air fryer.

In an optional embodiment, a downward sunken accommodating groove is formed in a middle of the food tray, a flow guiding part sunken into the frying basket and corresponding to the accommodating groove is arranged at a bottom of the frying basket, and the flow guiding part is adapted to extend in a direction from a middle of a bottom wall of the frying basket to an edge. The flow guiding part is adapted to play a role in flow guiding. By arranging the flow guiding part at the bottom of the frying basket, the circulating heat flow flowing from the upper space of the food tray into the lower space of the food tray can be guided towards a direction of the ventilation hole in the side wall of the frying basket, thereby improving the circulation efficiency of the heat flow inside the frying basket and improving the cooking efficiency of an air fryer product.

In an optional embodiment, a downward sunken arc-shaped flow guiding surface is arranged at the bottom of the accommodating groove, and an extending direction of the arc-shaped flow guiding surface is the same as an extending direction of the flow guiding part. By arranging the arc-shaped flow guiding surface having the same extending direction as the flow guiding part at the bottom of the accommodating groove, the circulating heat flow below the food tray can be better guided by cooperating with the flow guiding part, thereby improving the circulation efficiency of the heat flow inside the frying basket.

In an optional embodiment, a supporting structure matching the food tray is arranged on an inner side wall of the frying basket, and the food tray is adapted to be detachably suspended in the frying basket through the supporting structure. By arranging the supporting structure inside the frying basket to suspend the food tray inside the frying basket, the air fryer can not only increase a flowable space for the circulating heat flow below the food tray, but also can heat a bottom of the food through the circulating heat flow after holding the food up, thereby simplifying cooking steps, avoiding the flipping operation, and effectively improving the cooking efficiency and the cooking effect.

In an optional embodiment, an outer edge of the food tray is sleeved with a protective sleeve made of an elastic high-temperature resistant material, and the outer edge of the food tray is adapted to abut against the supporting structure and the inner side wall of the frying basket through the protective sleeve respectively. The protective sleeve is adapted to play a role in protection. By sleeving the protective sleeve on the outer edge of the food tray, the food tray can be prevented from scratching an inner wall of the frying basket during disassembly and installation, thereby effectively improving use experience of a user. A sealed fit between the edge of the food tray and the inner side wall of the frying basket can be achieved, a heat air flow entering the frying basket through the top opening can be allowed to only flow downward through the through hole in the food tray, the circulating heat air flow is fully utilized for heating, and the cooking efficiency can be improved.

In an optional embodiment, an air suction plate is arranged on the side wall of one side of the cooking chamber adjacent to the hot air circulation system, a plurality of open pores are dispersed on the air suction plate to form the air suction hole, and the air suction hole at least partially corresponds to the ventilation hole in the side wall of the frying basket. By arranging the air suction plate on the side wall of one side of the cooking chamber adjacent to the hot air circulation system, and arranging the plurality of air suction holes formed from the open pores in the air suction plate, problems such as difficulty in cleaning and damage to electrical devices caused by a situation that the food in the frying basket is sucked into the hot air chamber by the hot air circulation system can be avoided while allowing the circulating heat flow to pass through. At the same time, the air suction hole at least partially corresponding to the ventilation hole can effectively improve the circulation efficiency of the circulating heat flow inside the cooking chamber, thereby improving the cooking efficiency.

In an optional embodiment, a visible opening communicating with the cooking chamber is formed in a top of the machine body, the visible opening is internally provided with a visible window, and the visible window at least partially corresponds to the top opening of the frying basket. By arranging the visible opening corresponding to the top opening of the frying basket on the top of the machine body, the food inside the frying basket can be visible, so that the user can intuitively observe a cooking state of the food inside the frying basket, effectively improving cooking pleasure and the cooking effect.

In an optional embodiment, a heating tube is arranged on the top of the cooking chamber, the heating tube is a light wave tube, and the heating tube is adapted to be arranged surrounding an outer edge of the visible opening. By selecting the light wave tube as the heating tube and arranging the heating tube as surrounding the outer edge of the visible window, not only can an interior of the cooking chamber be illuminated while heating, but also the visibility of the visible window can be avoided from being affected by light generated by the heating tube, thereby effectively improving a visible effect of the air fryer and the use experience of the user.

In this embodiment, a drawer-type frying basket component is further provided, and includes a frying basket and an outer pot component, the frying basket has an accommodating chamber with a top opening, and a hot air hole is formed in a bottom of the accommodating chamber; and the outer pot component includes a door baffle and an oil receiving tray arranged at a bottom of the door baffle and fixedly connected with the door baffle, the frying basket is detachably arranged on the door baffle, a lower portion of the frying basket extends into the oil receiving tray, an airflow channel for allowing an airflow to pass through is formed between an outer wall of the frying basket and an inner wall of the oil receiving tray, and two ends of the airflow channel are adapted to communicate with the hot air hole and an outer space of the frying basket component respectively. By arranging the oil receiving tray below the frying basket and arranging the hot air hole at a bottom of the frying basket, the present application can not only discharge grease in the frying basket into the oil receiving tray through the hot air hole, so as to avoid the grease from being accumulated at the bottom of the frying basket and affecting taste of food, but also enable hot air to penetrate through the hot air hole to heat a bottom of the food in the frying basket during cooking of the frying basket component, thereby avoiding a flipping operation, simplifying cooking steps, and improving cooking efficiency and a cooking effect. At the same time, the lower portion of the frying basket extends into the oil receiving tray, and thus the grease in the frying basket can be better discharged into the oil receiving tray, avoiding splashing of the grease during the discharge process and effectively ensuring use experience of a user. In addition, the airflow channel is adapted to play a role in flow guiding. An airflow in the frying basket component can be guided through the airflow channel, so as to increase a circulation speed of the airflow inside the frying basket component, and a sufficient oil receiving space between a bottom of the oil receiving tray and the bottom of the frying basket can further be ensured, thereby better discharging the grease inside the frying basket.

In an optional embodiment, a side portion of the frying basket is of a closed structure, a sunken part formed by sinking into the accommodating chamber is arranged on a lower portion of a side wall of the frying basket, and the sunken part extends into the oil receiving tray to form the airflow channel with the inner wall of the oil receiving tray. By arranging the side portion of the frying basket as the closed structure, an airflow inside the frying basket can be guided downward, thereby improving airflow circulation efficiency inside the frying basket component. At the same time, by arranging the sunken part sinking into the accommodating chamber at the lower portion of the side wall of the frying basket, it is possible to form the airflow channel with the inner wall of the oil receiving tray to guide the airflow while ensuring that the frying basket has sufficient capacity to cook more food to ensure the cooking efficiency.

In an optional embodiment, a handle extending towards an outer side is arranged at a top of the frying basket, the handle is further provided with a limiting part, the door baffle is provided with a limiting groove matching the limiting part, and the frying basket is adapted to be detachably arranged on the door baffle through the limiting part and the limiting groove. By detachably connecting the frying basket with the door baffle, it is convenient for the user to disassemble, clean, and replace the outer pot component and the frying basket, thereby improving the convenience of use.

In an optional embodiment, a supporting part protruding upward is arranged at a bottom of the inner wall of the oil receiving tray, and the supporting part is adapted to abut against the bottom of the frying basket. The supporting part is adapted to play a role in supporting, and by arranging the supporting part abutting against the bottom of the frying basket at the bottom of the inner wall of the oil receiving tray, stability of a connection between the frying basket and the outer pot component can be effectively improved.

In an optional embodiment, a protruding part extending downward and corresponding to the supporting part is arranged at the bottom of the frying basket, and the frying basket is adapted to abut against the supporting part through the protruding part. By arranging the protruding part abutting against the supporting part at the bottom of the frying basket, a problem that the hot air hole is blocked when the supporting part abuts against the bottom of the frying basket, and thus the hot air cannot penetrate through the hot air hole to form a circulating heat flow and cannot heat the bottom of the food inside the frying basket, resulting in regional differences in cooking the food can be avoided.

In an optional embodiment, a protective pad made of an elastic high-temperature resistant material is arranged on one or both of the supporting part and the protruding part, and the supporting part is adapted to abut against the protruding part through the protective pad. By arranging the protective pad on one or both of the supporting part and the protruding part, a problem of mutual scratching when the supporting part abuts against the bottom of the frying basket or the protruding part can be avoided, thereby effectively improving the use experience of the user.

In an optional embodiment, a handle extending towards an outer side is arranged at the top of the frying basket, the door baffle is provided with a receding groove to accommodate the handle, the supporting part is arranged at one end of the oil receiving tray away from the receding groove, and a connection line between at least one point in the receding groove and at least one point on the supporting part passes through a center line at the bottom of the oil receiving tray. By arranging the supporting part at one end of the oil receiving tray away from the receding groove and making the supporting part corresponding to the receding groove, not only can the supporting part cooperate with the door baffle to support two ends of the frying basket, but also can ensure supporting stationarity of the frying basket, thereby ensuring the stability of the connection between the frying basket and the outer pot component.

In this embodiment, an air fryer is further provided, and includes a machine body. A cooking chamber with a side opening is formed in the machine body, the cooking chamber is internally provided with any drawer-type frying basket component as described above that is able to be withdrawn through the side opening, and a top opening of an accommodating chamber of a frying basket communicates with an airflow channel and the cooking chamber. By arranging the frying basket component inside the cooking chamber, the air fryer can better cook food, thereby improving a cooking effect of the food.

In an optional embodiment, a hot air chamber is formed in a side portion of the cooking chamber, the hot air chamber is internally provided with a hot air circulation system for generating a circulating heat flow, an air outlet communicating with the hot air chamber and facing the top opening of the frying basket is formed in an upper portion of a side wall of one side of the cooking chamber adjacent to the hot air circulation system, an air suction port corresponding to the hot air circulation system is formed in a lower portion of the side wall of one side of the cooking chamber adjacent to the hot air circulation system, and the circulating heat flow generated by the hot air circulation system is adapted to enter the cooking chamber from the air outlet, and flow back to the hot air chamber from the air suction port. The air fryer heats the food inside the cooking chamber in a manner of guiding air out through the side portion, which can avoid a situation of food burning due to the fact that the circulating heat flow is directly blown into the frying basket, thereby effectively improving the cooking effect. In an optional embodiment, one end of the airflow channel communicates with a hot air hole, the other end of the airflow channel is provided with an airflow outlet, and the airflow outlet is adapted to correspond to at least part of the air suction port. By making the airflow outlet of the airflow channel corresponding to at least part of the air suction port, circulation efficiency of the heat flow inside the frying basket component can be effectively improved, thereby improving cooking efficiency.

In this embodiment, a three-dimensional heating-type air fryer is further provided, and includes a machine body, a cooking chamber arranged in the machine body, and a hot air circulation system communicating with the cooking chamber for delivering a circulating airflow into the cooking chamber. The cooking chamber is internally provided with a frying basket with a top opening, a first heating component is arranged above the frying basket, the hot air circulation system has an air outlet and an air suction port, and an airflow in the air outlet enters the cooking chamber and then is adapted to be heated by the first heating component and flow into the frying basket through the top opening of the frying basket. A second heating component is arranged below the frying basket, a hot air gap communicating with the air suction port is formed between an outer wall of the frying basket and an inner wall of the cooking chamber, a hot air hole communicating with the hot air gap is formed in a lower portion of the frying basket, and the second heating component is arranged in the hot air gap. By arranging the first heating component and the second heating component above and below the frying basket respectively, the present application can not only achieve simultaneous heating of upper and lower surfaces of food inside the frying basket, thereby avoiding a flipping operation, simplifying cooking steps, and improving use experience of a user, but also can allow for secondary heating of a heat flow in the hot air gap through the second heating component, thereby increasing a temperature of the circulating heat flow and improving cooking efficiency.

In an optional embodiment, an annular air guiding chamber sunken upward and having a downward opening is formed in a top of the cooking chamber, the air guiding chamber is adapted to communicate with the air outlet, the top opening of the frying basket is at least partially located under the air guiding chamber, and the first heating component is arranged in the air guiding chamber surrounding an inner wall of the air guiding chamber. By arranging the annular air guiding chamber communicating with the air outlet at the top of the cooking chamber and arranging the first heating component surrounding the inner wall of the air guiding chamber, not only can the first heating component better heat an airflow inside the air guiding chamber, but also the airflow flowing out of the air outlet can be uniformly guided into the frying basket through the air guiding chamber, thereby heating the food inside the frying basket and effectively improving a cooking effect.

In an optional embodiment, the frying basket includes a frying basket body and a mesh plate matching the frying basket body. A bottom of the frying basket body has a bottom opening, a supporting structure is arranged on an inner side of the bottom opening, the mesh plate is detachably limited on the supporting structure, and the mesh plate is provided with the plurality of hot air holes. By detachably arranging the mesh plate at the bottom of the frying basket body, disassembly, cleaning and replacing are facilitated, thereby improving use convenience of the user.

In an optional embodiment, a downward sunken heating groove is formed in a bottom of the cooking chamber, and the second heating component is suspended in the heating groove. By suspending the second heating component in the heating groove, not only can the second heating component be hidden, thereby improving overall aesthetics, but also can dispersion of heat generated by the second heating component be avoided, thereby better heating an airflow inside the heating groove and effectively improving heating efficiency.

In an optional embodiment, a plurality of fixing elements made of elastic high-temperature resistant materials are arranged in the heating groove at intervals, one ends of the fixing elements are provided with bending parts for fixing the second heating component, the other ends of the fixing elements are provided with fixed parts fixedly connected with a bottom wall of the heating groove through fasteners, the fixed parts are provided with a limiting part extending towards the bottom wall of the heating groove, a limiting hole matching the limiting part is arranged on the bottom wall of the heating groove, and the limiting part is adapted to extend into the limiting hole. By arranging the plurality of fixing elements in the heating groove to fix the second heating component, the connection stability of the second heating component can be effectively improved. At the same time, by fixing the fixing elements with the fasteners and arranging the limiting part on the fixed parts of the fixing elements, not only can the fixing elements be fixed, but also can the fixing elements be limited, which can effectively improve the connection stability and structural reliability of the fixing elements.

In an optional embodiment, a temperature sensor is arranged in the heating groove, a fuse is arranged on an outer wall of the heating groove, and the fuse is adapted to be electrically connected with the temperature sensor and a control circuit of the machine body. By arranging the temperature sensor in the heating groove, a temperature at the bottom of the cooking chamber can be monitored to avoid excessive temperature inside the cooking chamber. Meanwhile, by arranging the fuse on the outer wall of the heating groove, the control circuit of the air fryer can be automatically disconnected when the temperature sensor detects that the temperature inside the heating groove is too high, thereby reducing the temperature inside the cooking chamber and effectively improving the use safety and the cooking effect.

In an optional embodiment, a heat dissipation duct located on an outer side of the cooking chamber is formed in the machine body, and the outer wall of the heating groove is at least partially located inside the heat dissipation duct. By arranging the heat dissipation duct on the outer side of the cooking chamber, heat dissipation of the machine body can be achieved, which can not only avoid the excessive temperature of the machine body, but also can ensure the normal running of electrical devices inside the machine body, thereby effectively improving the use safety and performance reliability of an air fryer product. At the same time, at least part of the outer wall of the heating groove is arranged in the heat dissipation duct, thus heat dissipation of the outer wall of the heating groove can be achieved through a heat dissipation cold flow in the heat dissipation duct, the high temperature heat in the heating groove is avoided from being transferred to an exterior of the heating groove and affecting the normal running of other electrical devices outside the heating groove, and the performance stability of the air fryer can be effectively improved.

In an optional embodiment, a side wall of the heating groove is of an arc-shaped flow guiding structure extending obliquely in a direction from a bottom to an outer side of a top. By arranging the side wall of the heating groove as the arc-shaped flow guiding structure, the circulating heat flow in the hot air gap can efficiently enter and exit the heating groove, and be heated by the second heating component, which can not only effectively improve circulation efficiency of the heat flow inside the cooking chamber, but also can effectively improve the cooking efficiency.

In an optional embodiment, a visible opening is formed in the top of the cooking chamber, the visible opening is internally provided with a visible window for closing the visible opening, and the visible window at least partially corresponds to the top opening of the frying basket. By arranging the visible opening at the top of the cooking chamber, visibility of a situation inside the cooking chamber can be achieved, so that the user can intuitively observe a cooking state of the food inside the cooking chamber and thus better cook the food, thereby effectively improving the cooking effect and the cooking experience.

In an optional embodiment, the first heating component includes a heating tube, the heating tube is a light wave tube, and the heating tube is adapted to be arranged surrounding an outer edge of the visible opening. By using the light wave tube as the heating tube, the heating tube can illuminate an interior of the cooking chamber while heating air inside the cooking chamber, thereby improving the visibility and a visible effect inside the cooking chamber. Meanwhile, by arranging the heating tube surrounding the outer edge of the visible opening, light generated by the heating tube will not interfere with the visibility of the visible opening, thereby effectively improving the visibility and the visible effect of the air fryer.

In this embodiment, a novel frying basket component is further provided, and includes a frying basket and a ventilation hole formed in a side portion of the frying basket and allowing an airflow to pass through, a blocking structure in movable fit with the ventilation hole is arranged at the ventilation hole, the blocking structure has a stressed state and a non-stressed state, and when the blocking structure is in the stressed state, the blocking structure is adapted to open the ventilation hole; and when the blocking structure is in the non-stressed state, the blocking structure is adapted to block the ventilation hole. By arranging the blocking structure in movable fit with the ventilation hole at the ventilation hole of the frying basket to control the opening and closing of the ventilation hole, the present application can not only achieve opening of the ventilation hole for food cooking during use, but also can achieve closing of the ventilation hole after use to prevent grease, condensed water, etc. inside the frying basket from flowing out into an external environment through the ventilation hole and thus causing external environmental pollution, thereby effectively improving use convenience and use experience of a user.

In an optional embodiment, the blocking structure includes a sealing element for blocking the ventilation hole, and the sealing element is adapted to be made of an elastic high-temperature resistant material. By making the sealing element using the elastic high-temperature resistant material, the high temperature inside the frying basket can be avoided from affecting performance of the sealing element, thereby ensuring the sealing performance of the sealing element.

In an optional embodiment, a sealing part matching the ventilation hole is arranged on one side of the sealing element facing a side wall of the frying basket, and when the blocking structure is in the non-stressed state, the sealing part at least partially extends into the ventilation hole and is in interference fit with an inner wall of the ventilation hole. By extending at least part of the sealing part into the ventilation hole and making the sealing part in interference fit with the inner wall of the ventilation hole, not only can the stability of the connection between the sealing element and the side wall of the frying basket be effectively improved, but also the sealing effect of the sealing element can be effectively improved, thereby ensuring the use experience of the user.

In an optional embodiment, a side portion of the sealing part is of an arc-shaped structure matching the ventilation hole. By arranging the side portion of the sealing part as the arc-shaped structure matching the ventilation hole, a contact area between the sealing part and the ventilation hole can be effectively increased, thereby improving the sealing effect.

In an optional embodiment, a limiting part formed by outward extension of the sealing part is arranged on an outer side of the sealing part, and when the blocking structure is in the non-stressed state, the limiting part is adapted to abut against the side wall of the frying basket at an outer edge of the ventilation hole. The limiting part is adapted to play a limiting role, and by arranging the limiting part abutting against the side wall of the frying basket on the outer side of the sealing part, the sealing part can be prevented from disengaging from the ventilation hole during sealing, thereby ensuring the performance stability and structural reliability of the blocking structure.

In an optional embodiment, the blocking structure includes a sealing element arranged in the frying basket and matching the ventilation hole, and a movable element connected with the sealing element, an installation hole matching the movable element is formed in the side wall of the frying basket, and the movable element is movably limited in the installation hole; one end of the movable element is connected to the sealing element, the other end of the movable element is provided with an abutting part extending to an exterior of the frying basket, and a position between the abutting part and an outer wall of the frying basket is sleeved with an elastic element; when the blocking structure is in the stressed state, the elastic element is compressed, and the movable element is adapted to drive the sealing element to move towards an interior of the frying basket, so as to open the ventilation hole; and when the blocking structure is in the non-stressed state, the movable element is adapted to drive the sealing element to move towards the exterior of the frying basket under the action of the elastic element, so as to block the ventilation hole. By arranging the sealing element in the frying basket, the present application can hide the sealing element, thereby improving the overall aesthetics of the frying basket. Meanwhile, by arranging the elastic element between the abutting part of the movable element and the side wall of the frying basket, the present application can achieve automatic resetting of the sealing element to block the ventilation hole when the blocking structure changes from the stressed state to the non-stressed state, thereby improving the use convenience of the blocking structure and the frying basket component.

In an optional embodiment, a limiting groove is formed in the outer wall of the frying basket, and the elastic element is at least partially located within the limiting groove. The limiting groove is adapted to play a role in limiting and/or positioning. Through the limiting groove, not only can the elastic element be positioned during installation of the elastic element, thereby reducing the installation difficulty of the elastic element, but also can the elastic element be limited, thereby avoiding situations of displacement and damage of the elastic element during compression and resetting, and effectively ensuring the performance reliability and stability of the elastic element.

In an optional embodiment, the movable element includes a first movable element and a second movable element, and the first movable element and the second movable element are adapted to be oppositely arranged on two sides of the ventilation hole. By arranging the plurality of ventilation holes in the frying basket, an outflow speed of a circulating heat flow in the frying basket can be effectively increased, thereby improving circulation efficiency of the heat flow and improving cooking efficiency. At the same time, by arranging the first movable element and the second movable element on the two sides of the ventilation hole respectively, not only can the stability of the connection between the blocking structure and the side wall of the frying basket be increased, but also force applied to the sealing element when the sealing element makes contact with the side wall of the frying basket can be more uniform, and the sealing performance can be better, thereby effectively improving the sealing stability and structural reliability of the blocking structure.

In an optional embodiment, the side wall of the frying basket is provided with the plurality of ventilation holes, a connecting element is arranged between the sealing elements for blocking the two adjacent ventilation holes, and the connecting element is adapted to connect the two adjacent sealing elements. By arranging the connecting element between the two adjacent sealing elements to connect the two adjacent sealing elements, not only can the operation difficulty during installation of the plurality of sealing elements be reduced and the installation convenience be improved, but also synchronous movement of the plurality of sealing elements can be achieved, thereby simultaneously opening or blocking the plurality of ventilation holes and improving the use convenience of the blocking structure.

In this embodiment, an air fryer is provided, and includes a fryer body, a cooking chamber arranged in the fryer body and having a side opening, and a hot air circulation system communicating with the cooking chamber. The cooking chamber is internally provided with the novel frying basket component as described above that is able to be withdrawn through the front side opening. When the novel frying basket component is arranged in the cooking chamber and a blocking structure is in a stressed state, an interior of a frying basket communicating with the cooking chamber through a ventilation hole. When the frying basket component is arranged in the cooking chamber, an abutting part of a movable element is adapted to abut against an inner side wall of the cooking chamber, the blocking structure is adapted to be in the stressed state, and the movable element is adapted to drive a sealing element to move into the frying basket under reacting force of the inner side wall of the cooking chamber, thereby opening the ventilation hole. When the frying basket component is withdrawn from the cooking chamber, the abutting part of the movable element separates from the inner side wall of the cooking chamber, the reacting force of the inner side wall of the cooking chamber disappears, the blocking structure is adapted to be in a non-stressed state, and the movable element is adapted to drive the sealing element to move towards an outer side of the frying basket under the action of an elastic element, thereby blocking the ventilation hole. By detachably arranging the frying basket component in the cooking chamber, the air fryer can achieve opening and blocking of the ventilation hole by disassembling and installing the frying basket component, so as to open the ventilation hole during cooking to allow hot air to pass through for cooking food inside the frying basket. After cooking, when the frying basket component is taken out, the ventilation hole is automatically blocked to prevent grease, condensed water, etc. inside the frying basket from flowing out to an external environment through the ventilation hole and polluting the external environment, thereby improving the use convenience of an air fryer product and use experience of a user.

Compared with the prior art, beneficial effects of the present application are as follows: by arranging the oil receiving tray below the frying basket and the hot air hole at the bottom of the frying basket, the present application can not only discharge the grease in the frying basket into the oil receiving tray through the hot air hole, so as to avoid the grease from being accumulated at the bottom of the frying basket and affecting the taste of the food, but also enable the hot air to penetrate through the hot air hole to heat the bottom of the food in the frying basket when the user cooks using the frying basket component, thereby avoiding the flipping operation, simplifying the cooking steps, and improving the cooking efficiency and the cooking effect. At the same time, the lower portion of the frying basket extends into the oil receiving tray, and thus the grease in the frying basket can be better discharged into the oil receiving tray, avoiding splashing of the grease during the discharge process and effectively ensuring the use experience of the user. In addition, the airflow channel is adapted to play the role in flow guiding. The airflow in the frying basket component can be guided through the airflow channel, so as to increase the circulation speed of the airflow inside the frying basket component, and the sufficient oil receiving space between the bottom of the oil receiving tray and the bottom of the frying basket can further be ensured, thereby better discharging the grease inside the frying basket.

By arranging the hot air circulation system on the side portion of the cooking chamber to heat the food inside the frying basket in the manner of guiding the air out through the side portion, the present application can prevent the circulating heat flow generated by the hot air circulation system from being directly blown into the frying basket and resulting in the situations such as food burning. At the same time, by arranging the ventilation hole in the side wall of the frying basket below the food tray, the circulating heat flow entering the frying basket penetrates through the food tray and then flows out of the ventilation hole, which can not only make the food on the food tray more evenly heated, but also can heat the upper and lower surfaces of the food on the food tray, thereby avoiding the flipping operation and effectively improving the cooking efficiency and the cooking effect.

By arranging the first heating component and the second heating component above and below the frying basket respectively, the present application can not only achieve simultaneous heating of the upper and lower surfaces of the food inside the frying basket, thereby avoiding the flipping operation, simplifying the cooking steps, and improving the use experience of the user, but also can allow for secondary heating of the heat flow in the hot air gap through the second heating component, thereby increasing the temperature of the circulating heat flow and improving the cooking efficiency.

By arranging the blocking structure in movable fit with the ventilation hole at the ventilation hole of the frying basket, the present application can achieve blocking of the ventilation hole, prevent the grease, the condensed water, etc. inside the frying basket from flowing out into the external environment through the ventilation hole and thus causing external environmental pollution, and effectively improve the use experience of the user. At the same time, by detachably arranging the frying basket component in the cooking chamber, the present application can achieve opening and blocking of the ventilation hole by disassembling and installing the frying basket component, so as to open the ventilation hole during cooking to allow the hot air to pass through for cooking the food inside the frying basket. After cooking, when the frying basket component is taken out, the ventilation hole is automatically blocked to prevent the grease, the condensed water, etc. inside the frying basket from flowing out to the external environment through the ventilation hole and polluting the external environment, thereby improving the use convenience of the air fryer product and the use experience of the user.

In order to make the objectives, technical solutions and advantages of the embodiments of the present disclosure clearer, the technical solutions in the embodiments of the present disclosure will be described below clearly and completely with reference to the accompanying drawings in the embodiments of the present disclosure. Obviously, the described embodiments are part of the embodiments of the present disclosure, but not all the embodiments. The components of the embodiments of the present disclosure, which are generally described and shown in accompanying drawings herein, may be arranged and designed in various different configurations.

Therefore, the following detailed description of the embodiments of the present disclosure provided in the accompanying drawings is not intended to limit the scope of the present disclosure required to be protected, but merely represents selected embodiments of the present disclosure. On the basis of the embodiments in the present disclosure, all other embodiments obtained by those ordinarily skilled in the art without inventive efforts fall within the scope of protection of the present disclosure.

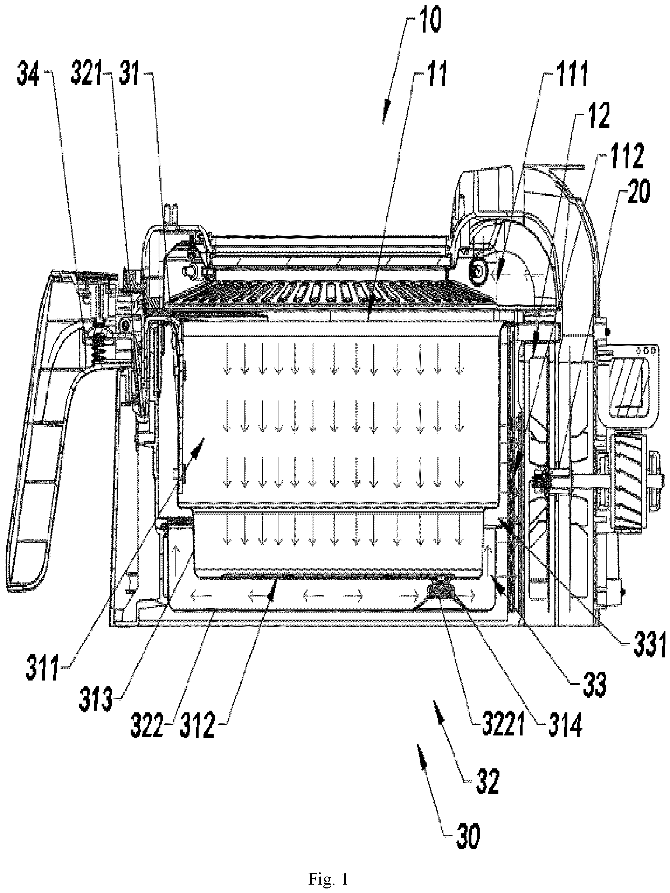

In a first aspect, Fig. 1 to Fig. 2 show schematic diagrams of a drawer-type frying basket component and an air fryer provided by the present application. The air fryer includes a machine body 10, a cooking chamber 11 arranged in the machine body 10, and a hot air circulation system 20 communicating with the cooking chamber 11 for generating a circulating heat flow. The cooking chamber 11 is internally provided with a frying basket component 30 for carrying food, and the circulating heat flow generated by the hot air circulation system 20 is adapted to be introduced into the cooking chamber 11 to cook the food inside the frying basket component 30.

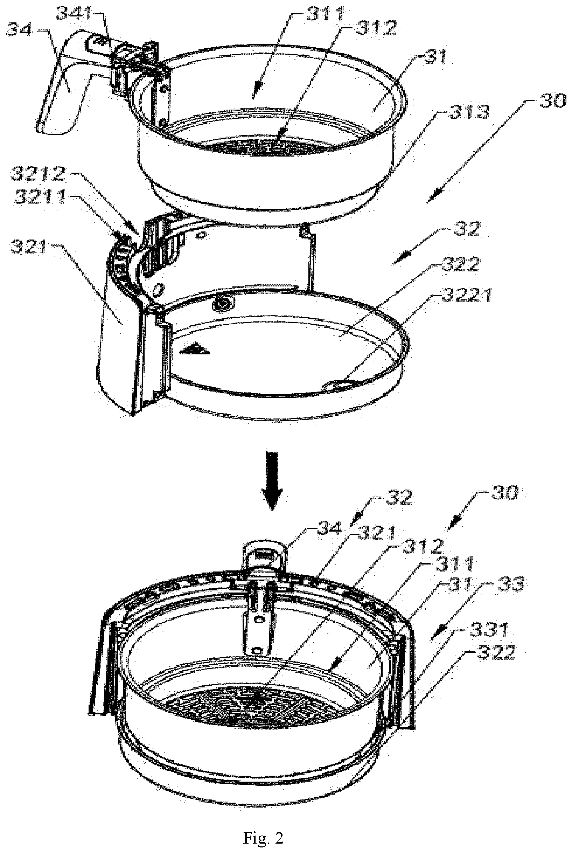

As shown in Fig. 2, the frying basket component includes a frying basket 31 and an outer pot component 32, the frying basket 31 has an accommodating chamber 311 with a top opening, and a hot air hole 312 is formed in a bottom of the accommodating chamber 311; the outer pot component 32 includes a door baffle 321 and an oil receiving tray 322 arranged at a bottom of the door baffle 321 and fixedly connected with the door baffle 321, the frying basket 31 is adapted to be detachably arranged on the door baffle 321, and a lower portion of the frying basket 31 is adapted to extend into the oil receiving tray 322; and an airflow channel 33 for allowing an airflow to pass through is formed between an outer wall of the frying basket 31 and an inner wall of the oil receiving tray 322, and two ends of the airflow channel 33 are adapted to communicate with the hot air hole 312 and an outer space of the frying basket component 30 respectively. By arranging the oil receiving tray 322 below the frying basket 31 and arranging the hot air hole 312 at a bottom of the frying basket 31, the frying basket component 30 can not only discharge grease in the frying basket 31 into the oil receiving tray 322 through the hot air hole 312, so as to avoid the grease from being accumulated at the bottom of the frying basket 31 and affecting taste of the food, but also enable hot air to penetrate through the hot air hole 312 to heat a bottom of the food in the frying basket 31 when a user cooks using the frying basket component 30, thereby avoiding a flipping operation, simplifying cooking steps, and improving cooking efficiency and a cooking effect. At the same time, by extending the lower portion of the frying basket 31 into the oil receiving tray 322, the frying basket component 30 can better discharge the grease in the frying basket 31 into the oil receiving tray 322, so as to avoid splashing of the grease during the discharge process, thereby effectively ensuring use experience of the user. In addition, the airflow channel 33 is adapted to play a role in flow guiding. An airflow in the frying basket component 30 can be guided through the airflow channel 33, so as to increase a circulation speed of the airflow inside the frying basket component 30, and a sufficient oil receiving space between a bottom of the oil receiving tray 322 and the bottom of the frying basket 31 can further be ensured, thereby better discharging the grease inside the frying basket 31.

As shown in Fig. 1 to Fig. 2, a side portion of the frying basket 31 is preferably of a closed structure, a sunken part 313 formed by sinking into the accommodating chamber 311 is arranged on a lower portion of a side wall of the frying basket 31, and the sunken part 313 is adapted to extend into the oil receiving tray 322 to form the airflow channel 33 with the inner wall of the oil receiving tray 322. By arranging the side portion of the frying basket 31 as the closed structure, the frying basket component 30 can guide an airflow inside the frying basket 31 downward, thereby improving airflow circulation efficiency inside the frying basket component 30. At the same time, by arranging the sunken part 313 sinking into the accommodating chamber 311 at the lower portion of the side wall of the frying basket 31, it is possible to form the airflow channel 33 with the inner wall of the oil receiving tray 322 to guide the airflow while ensuring that the frying basket 31 has sufficient capacity to cook more food to ensure the cooking efficiency.

As shown in Fig. 2, a handle 34 extending towards an outer side is arranged at a top of the frying basket 31, the handle 34 is further provided with a limiting part 341, the door baffle 321 is provided with a limiting groove 3211 matching the limiting part 341, and the frying basket 31 is adapted to be detachably arranged on the door baffle 321 through the limiting part 341 and the limiting groove 3211. By detachably connecting the frying basket with the door baffle, it is convenient for the user to disassemble, clean, and replace the outer pot component and the frying basket, thereby improving the convenience of use.

As shown in Fig. 1 and Fig. 2, a supporting part 3221 protruding upward is arranged at a bottom of the inner wall of the oil receiving tray 322, and the supporting part 3221 is adapted to abut against the bottom of the frying basket 31. The supporting part 3221 is adapted to play a role in supporting, and by arranging the supporting part 3221 abutting against the bottom of the frying basket 31 at the bottom of the inner wall of the oil receiving tray 322, stability of the connection between the frying basket 31 and the outer pot component 32 can be effectively improved.

As shown in Fig. 1, a protruding part 314 extending downward and corresponding to the supporting part 3221 is arranged at the bottom of the frying basket 31, and the frying basket 31 is adapted to abut against the supporting part 3221 through the protruding part 314. By arranging the protruding part 314 abutting against the supporting part 3221 at the bottom of the frying basket 31, the frying basket component 30 can avoid a problem that the hot air hole 312 is blocked when the supporting part 3221 abuts against the bottom of the frying basket 31, and thus the hot air cannot penetrate through the hot air hole 312 to form a circulating heat flow and cannot heat the bottom of the food inside the frying basket 31 when the frying basket component 30 is arranged in the cooking chamber 11 to cook the food, resulting in regional differences in cooking the food.

In an optional embodiment, a protective pad made of an elastic high-temperature resistant material such as silicone and rubber is preferably arranged on one or both of the supporting part 3221 and the protruding part 314, and the supporting part 3221 is adapted to abut against the protruding part 314 or the bottom of the frying basket 31 through the protective pad. By arranging the protective pad on one or both of the supporting part 3221 and the protruding part 314, a problem of mutual scratching when the supporting part 3221 abuts against the bottom of the frying basket 31 or the protruding part 314 can be avoided, thereby effectively improving the use experience of the user. The protective pad may be integrated with the supporting part 3221 and/or the protruding part 314, that is, the supporting part 3221 and/or the protruding part 314 themselves are made of the elastic high-temperature resistant materials.

As shown in Fig. 2, the door baffle 321 is provided with a receding groove 34 to accommodate the handle 34, and the limiting groove 3211 is adapted to be located in the receding groove 3212. When the handle 34 is arranged in the accommodating groove 3212, the limiting part 341 is clamped with the limiting groove 3211, and the frying basket is adapted to be detachably suspended on the door baffle 321.

As shown in Fig. 1 and Fig. 2, in an optional embodiment, the supporting part 3221 is preferably arranged at one end of the oil receiving tray 322 away from the receding groove 3212, and a connection line between at least one point in the receding groove 3212 and at least one point on the supporting part 3221 passes through a center line at the bottom of the oil receiving tray 322. By arranging the supporting part 3221 at one end of the oil receiving tray 322 away from the receding groove 3212 and making the supporting part corresponding to the receding groove 3212, not only can the supporting part 3221 cooperate with the door baffle 321 to support two ends of the frying basket 31, but also can ensure supporting stationarity of the frying basket 31, thereby ensuring the stability of the connection between the frying basket 31 and the outer pot component 32.

As shown in Fig. 1, the present application further provides an air fryer. A side opening is formed in a side portion of a cooking chamber 11 of the air fryer, the cooking chamber 11 is internally provided with any drawer-type frying basket component 30 as described above that is able to be withdrawn through the side opening, and a top opening of a frying basket 311 and an airflow channel 33 are adapted to communicate with the cooking chamber 11. By arranging the frying basket component 30 inside the cooking chamber 11, the air fryer can better cook food, thereby improving a cooking effect of the food.

As shown in Fig. 1, a hot air chamber 12 is formed in the side portion of the cooking chamber 11, the hot air chamber 12 is internally provided with a hot air circulation system 20 for generating a circulating heat flow, an air outlet 111 communicating with the hot air chamber 12 and facing the top opening of the frying basket 31 is formed in an upper portion of a side wall of one side of the cooking chamber 11 adjacent to the hot air circulation system 20, an air suction port 112 corresponding to the hot air circulation system 20 is formed in a lower portion of the side wall of one side of the cooking chamber 11 adjacent to the hot air circulation system 20, and the circulating heat flow generated by the hot air circulation system 20 is adapted to enter the cooking chamber 11 from the air outlet 111, and flow back to the hot air chamber 12 from the air suction port 112. The air fryer heats the food inside the cooking chamber 11 in a manner of guiding air out through the side portion, which can avoid a situation of food burning due to the fact that the circulating heat flow is directly blown into the frying basket 31, thereby effectively improving the cooking effect.

As shown in Fig. 1 and Fig. 2, one end of the airflow channel 33 communicates with a hot air hole 312, the other end of the airflow channel is provided with an airflow outlet 331, and the airflow outlet 331 is adapted to correspond to at least part of the air suction port 112. By making the airflow outlet 331 of the airflow channel 33 corresponding to at least part of the air suction port 112, the air fryer can effectively improve circulation efficiency of the heat flow inside the frying basket component 30, thereby improving cooking efficiency.

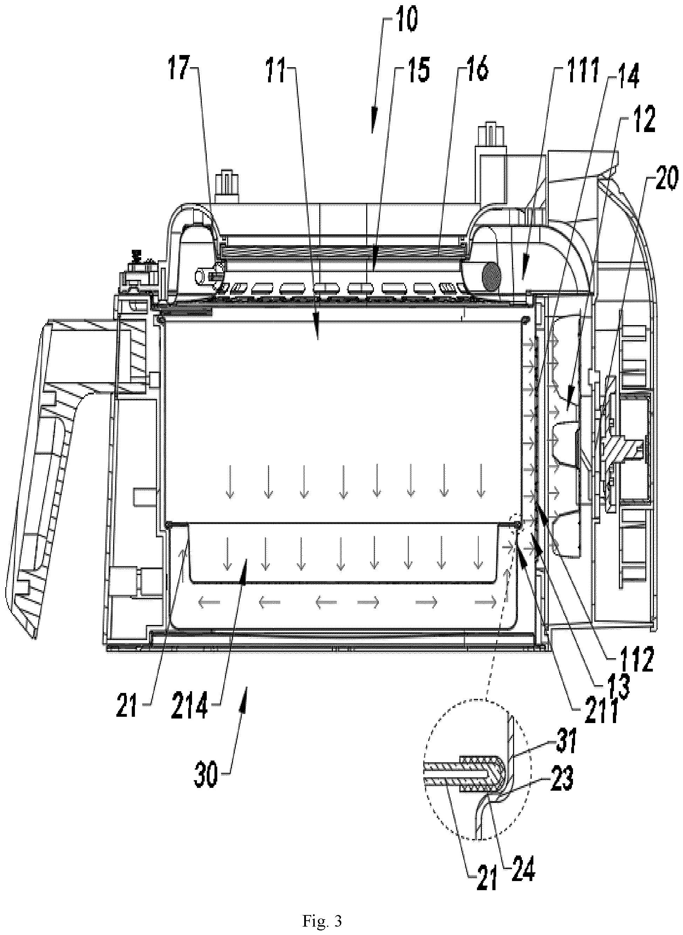

In a second aspect, Fig. 3 to Fig. 4 show a schematic diagram of a first embodiment of an air fryer with air suction on a side portion provided by the present application. The air fryer includes a machine body 10 and a cooking chamber 11 arranged in the machine body 10, and a frying basket 31 with a top opening is arranged in the cooking chamber 11. A hot air chamber 12 is formed in a side portion of the cooking chamber 11, the hot air chamber 12 is internally provided with a hot air circulation system 20 for generating a circulating heat flow, an air suction hole 112 corresponding to the hot air circulation system 20 is formed in a middle of a side wall of one side of the cooking chamber 11 adjacent to the hot air circulation system 20, an air outlet 111 communicating with the hot air chamber 12 is formed in an upper portion of the side wall of one side of the cooking chamber adjacent to the hot air circulation system 20, and the circulating heat flow generated by the hot air circulation system 20 is adapted to be guided to the air outlet, enter the cooking chamber 11 from the air outlet 111 to heat food inside the cooking chamber 11, and flow back to the hot air chamber 12 from the air suction port 112 under the action of the hot air circulation system 20.

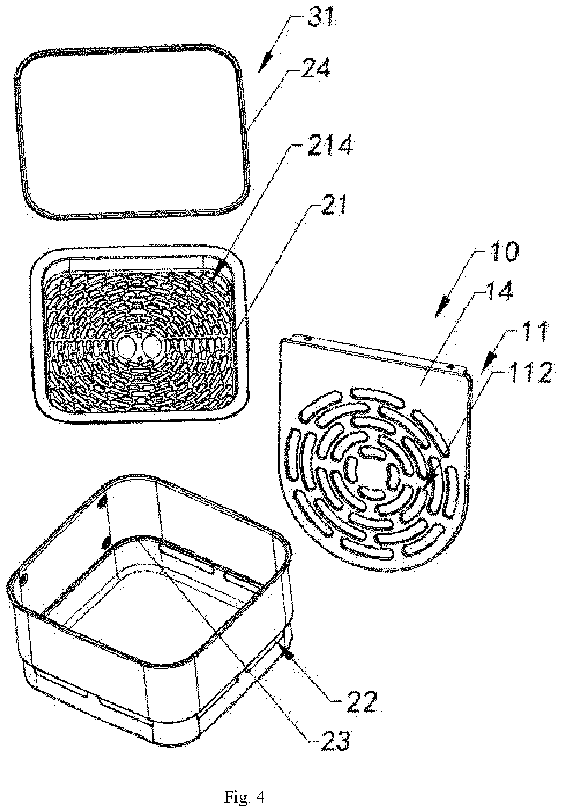

Further, as shown in Fig. 3 and Fig. 4, a food tray 21 with a through hole is suspended in the frying basket 31, an upper portion of the food tray 21 is adapted to place food to be cooked, a ventilation hole 211 is formed in a side wall of the frying basket 31 below the food tray 21, a hot air gap 13 is formed between the frying basket 31 and an inner wall of the cooking chamber 11, and the circulating heat flow generated by the hot air circulation system 20 flows out of the air outlet 111 and then is adapted to enter the frying basket 31 from the top opening of the frying basket 31 so as to cook the food on the food tray 21, penetrates through the food tray 21 from an upper space of the food tray 21 to enter a lower space of the food tray 21 and then flows out of the ventilation hole 211, and flows back to the hot air chamber 12 through the hot air gap 13 and the air suction hole 111. By arranging the hot air circulation system 20 on the side portion of the cooking chamber 11 to heat the food inside the frying basket 31 in a manner of guiding air out through the side portion, the present application can prevent the circulating heat flow generated by the hot air circulation system 20 from being directly blown into the frying basket 31 and resulting in situations such as food burning. At the same time, by arranging the ventilation hole 211 in the side wall of the frying basket 31 below the food tray 21, the circulating heat flow entering the frying basket 31 penetrates through the food tray 21 and then flows out of the ventilation hole 211, which can not only make the food on the food tray 21 more evenly heated, but also can heat upper and lower surfaces of the food on the food tray 21, thereby avoiding a flipping operation and effectively improving cooking efficiency and a cooking effect.

As shown in Fig. 3 and Fig. 4, in an optional embodiment, a downward sunken accommodating groove 214 is formed in a middle of the food tray 21, a side portion of the accommodating groove 214 is preferably of a closed structure, and a plurality of through holes are formed in a bottom of the accommodating groove 214. By arranging the downward sunken accommodating groove 214 in the middle of the food tray 21, the air fryer can not only increase the amount of food which can be loaded by the food tray 21, but also can effectively increase an accommodating space above the food tray 21, thereby increasing the amount of cookable food of the frying basket 31 and improving the cooking efficiency of the air fryer. At the same time, by arranging the side portion of the accommodating groove 214 as the closed structure, the circulating heat flow flowing from the upper space of the food tray into the lower space of the food tray may be guided downward, penetrates through the food tray 21 and then flows out of the ventilation hole 211, which can effectively improve a flowing speed of the circulating heat flow in the frying basket 31, thereby improving the cooking efficiency. As shown in Fig. 3, the ventilation hole 211 in the side wall of the frying basket 31 at least partially corresponds to the side portion of the accommodating groove 214 of the food tray 21. In the air fryer, a position between the side wall of the frying basket 31 and the side portion of the accommodating groove 214 is adapted to form a flow guiding gap, and the flow guiding gap is adapted to guide the circulating heat flow below the food tray. By arranging the ventilation hole 211 as corresponding to the side portion of the accommodating groove 214, the circulating heat flow below the food tray 21 can flow out of the frying basket 31 more smoothly through the ventilation hole 211, thereby improving circulation efficiency of the circulating heat flow inside the frying basket 31 and improving the cooking efficiency of the air fryer.

As shown in Fig. 3 and Fig. 4, a supporting structure 23 matching the food tray 21 is arranged on an inner side wall of the frying basket 31, and the food tray 21 is adapted to be detachably suspended in the frying basket 31 through the supporting structure 23. By arranging the supporting structure 23 inside the frying basket 31 to suspend the food tray 21 inside the frying basket 31, the air fryer can not only increase a flowable space for the circulating heat flow below the food tray 21, but also can heat a bottom of the food through the circulating heat flow after holding the food up, thereby simplifying cooking steps, avoiding the flipping operation, and effectively improving the cooking efficiency and the cooking effect.

As shown in Fig. 3 and Fig. 4, an outer edge of the food tray 21 is sleeved with a protective sleeve 24 made of an elastic high-temperature resistant material such as silicone and rubber, and the outer edge of the food tray 21 is adapted to abut against the supporting structure 23 and the inner side wall of the frying basket 31 through the protective sleeve 24 respectively. In the air fryer, the protective sleeve 24 is adapted to play a role in protecting. By making the outer edge of the food tray 21 being sleeved with the protective sleeve 24, the food tray 21 can be prevented from scratching an inner wall of the frying basket 31 during disassembly and installation, thereby effectively improving use experience of a user.

As shown in Fig. 3 and Fig. 4, in an optional embodiment, an air suction plate 14 is arranged on the side wall of one side of the cooking chamber 11 adjacent to the hot air circulation system 20, a plurality of open pores are dispersed on the air suction plate 14 to form the air suction hole 111, and the air suction hole 111 at least partially corresponds to the ventilation hole 211 in the side wall of the frying basket 31. By arranging the air suction plate 14 on the side wall of one side of the cooking chamber 11 adjacent to the hot air circulation system 12, and arranging the plurality of air suction holes 111 formed from the open pores in the air suction plate 14, problems such as difficulty in cleaning and damage to electrical devices caused by a situation that the food in the frying basket 31 is sucked into the hot air chamber by the hot air circulation system 20 can be avoided while allowing the circulating heat flow to pass through. At the same time, the air suction hole 111 at least partially corresponding to the ventilation hole 211 can effectively improve the circulation efficiency of the circulating heat flow inside the cooking chamber 11, thereby improving the cooking efficiency.

As shown in Fig. 3, a visible opening 15 communicating with the cooking chamber 11 is formed in a top of the machine body 10, the visible opening 15 is internally provided with a visible window 16 for closing the visible opening 15, the visible window 16 is at least partially made of a high-temperature resistant transparent material, such as high-temperature resistant transparent glass, and high-temperature resistant transparent plastic, and the visible window 16 at least partially corresponds to the top opening of the frying basket 31. By arranging the visible opening 15 corresponding to the top opening of the frying basket 31 on the top of the machine body 10, the food inside the frying basket 31 can be visible, so that the user can intuitively observe a cooking state of the food inside the frying basket 31, effectively improving cooking pleasure and the cooking effect.

As shown in Fig. 3, a heating tube 17 is arranged on a top of the cooking chamber 11, the heating tube 17 is preferably a light wave tube, and the heating tube 17 is adapted to be arranged surrounding an outer edge of the visible opening 15. By selecting the light wave tube as the heating tube 17 and arranging the heating tube as surrounding the outer edge of the visible window, not only can an interior of the cooking chamber 11 be illuminated while heating, but also the visibility of the visible window 16 can be avoided from being affected by light generated by the heating tube 17, thereby effectively improving a visible effect of the air fryer and the use experience of the user.

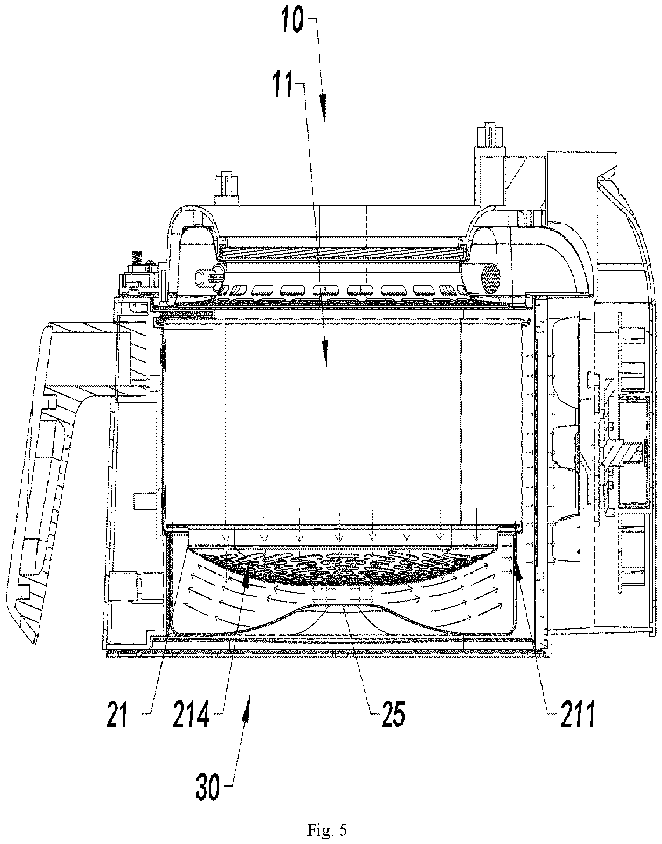

Fig. 5 to Fig. 6 show schematic diagrams of a second embodiment of an air fryer with air suction on a side portion provided by the present application. The partial structures and functions of the air fryer in Embodiment 2 are consistent with those of the air fryer in Embodiment 1, and will not be repeated here. By comparison, the difference between the air fryer in Embodiment 2 and the air fryer in Embodiment 1 is that a structure of the frying basket 31 is different.

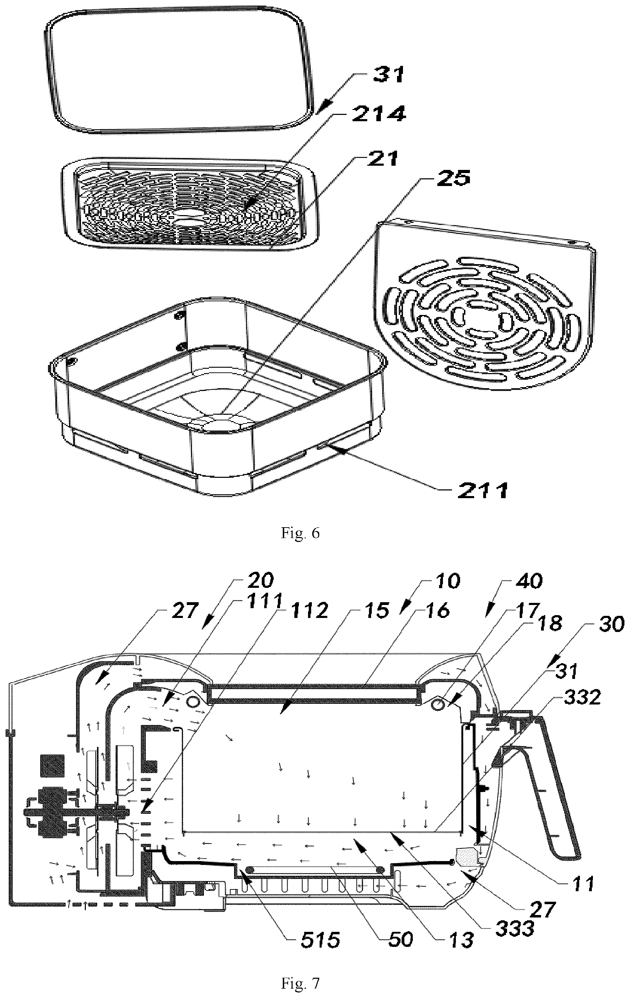

As shown in Fig. 5 and Fig. 6, in the air fryer of Embodiment 2, the air fryer includes a machine body 10 and a cooking chamber 11 arranged in the machine body 10. The cooking chamber 11 is internally provided with a frying basket 31, a food tray 21 with a through hole is suspended in the frying basket 31, an upper portion of the food tray 21 is adapted to place food to be cooked, a ventilation hole 211 is formed in a side wall of the frying basket 31 below the food tray 21, a downward sunken accommodating groove 214 is formed in a middle of the food tray 21, a side portion of the accommodating groove 214 is preferably of a closed structure, and a plurality of through holes are formed in a bottom of the accommodating groove 214. A flow guiding part 25 sunken into the frying basket 31 and corresponding to the accommodating groove 214 is arranged at a bottom of the frying basket 31, and the flow guiding part 25 is adapted to extend in a direction from a middle of a bottom wall of the frying basket 31 to an edge. The flow guiding part 25 is adapted to play a role in flow guiding. By arranging the flow guiding part 25 at the bottom of the frying basket 31, a circulating heat flow flowing from an upper space of the food tray 21 into a lower space of the food tray 21 can be guided towards a direction of the ventilation hole 211 in the side wall of the frying basket 31, thereby improving circulation efficiency of the heat flow inside the frying basket 31 and improving cooking efficiency of an air fryer product.

As shown in Fig. 5 and Fig. 6, a downward sunken arc-shaped flow guiding surface is further arranged at the bottom of the accommodating groove 214, and an extending direction of the arc-shaped flow guiding surface is the same as an extending direction of the flow guiding part 25. By arranging the arc-shaped flow guiding surface having the same extending direction as the flow guiding part 25 at the bottom of the accommodating groove 214, the air fryer can cooperate with the flow guiding part 25 to better guide the circulating heat flow below the food tray 21, thereby improving the circulation efficiency of the heat flow inside the frying basket 31.

In a third aspect, Fig. 7 to Fig. 8 show schematic diagrams of a three-dimensional heating-type air fryer provided by the present application. The air fryer includes a machine body 10, a cooking chamber 11 arranged in the machine body 10, and a hot air circulation system 20 communicating with the cooking chamber 11 for delivering a circulating airflow into the cooking chamber 11. The cooking chamber 11 is internally provided with a frying basket 31 with a top opening, the frying basket 31 is internally provided with an accommodating chamber for placing food, a first heating component 40 is arranged above the frying basket 31, the hot air circulation system 20 has an air outlet 111 and an air suction port 112, and an airflow in the air outlet 111 enters the cooking chamber 11 and then is adapted to be heated by the first heating component 40 and flow into the frying basket 31 through the top opening of the frying basket 31, so as to heat the food inside the frying basket 31.

As shown in Fig. 7, a second heating component 50 is arranged below the frying basket 31, a hot air gap 13 communicating with the air suction port 112 is formed between an outer wall of the frying basket 31 and an inner wall of the cooking chamber 11, a mesh plate hot air hole 333 communicating with the hot air gap 13 is formed in a lower portion of the frying basket 31, and the second heating component 50 is adapted to be arranged in the hot air gap 13. A circulating heat flow generated by the hot air circulation system 20 enters the cooking chamber 11 through the air outlet 111, and then is adapted to be heated by the first heating component 40 and enter the frying basket 31 through the top opening of the frying basket 31, flow out of the frying basket 31 through the mesh plate hot air hole 333 at a bottom of the frying basket 31, be reheated by the second heating component 50 in the hot air gap 13, and then flow back to the hot air circulation system 20 through the hot air gap 13 and the air suction port 112. By arranging the first heating component 40 and the second heating component 50 above and below the frying basket 31 respectively, the air fryer can not only achieve simultaneous heating of upper and lower surfaces of the food inside the frying basket 31, thereby avoiding a flipping operation, simplifying cooking steps, and improving use experience of a user, but also can allow for secondary heating of the heat flow in the hot air gap 13 through the second heating component 50, thereby increasing a temperature of the circulating heat flow and improving cooking efficiency.

As shown in Fig. 7, a top of the cooking chamber 11 is provided with an air duct plate that surrounds at least part of the cooking chamber 11, the air duct plate is provided with an annular air guiding chamber 18 sunken upward and having a downward opening, the air guiding chamber 18 is adapted to communicate with the air outlet 111, the top opening of the frying basket 31 is at least partially located under the air guiding chamber 18, and the first heating component 40 is arranged in the air guiding chamber 18 surrounding an inner wall of the air guiding chamber 18. By arranging the annular air guiding chamber 18 communicating with the air outlet 111 at the top of the cooking chamber 11 and arranging the first heating component 40 surrounding the inner wall of the air guiding chamber 18, the air fryer can not only make the first heating component 40 better heat an airflow inside the air guiding chamber 18, but also can uniformly guide the airflow flowing out of the air outlet 111 into the frying basket 31 through the air guiding chamber 18, thereby heating the food inside the frying basket 31 and effectively improving a cooking effect.

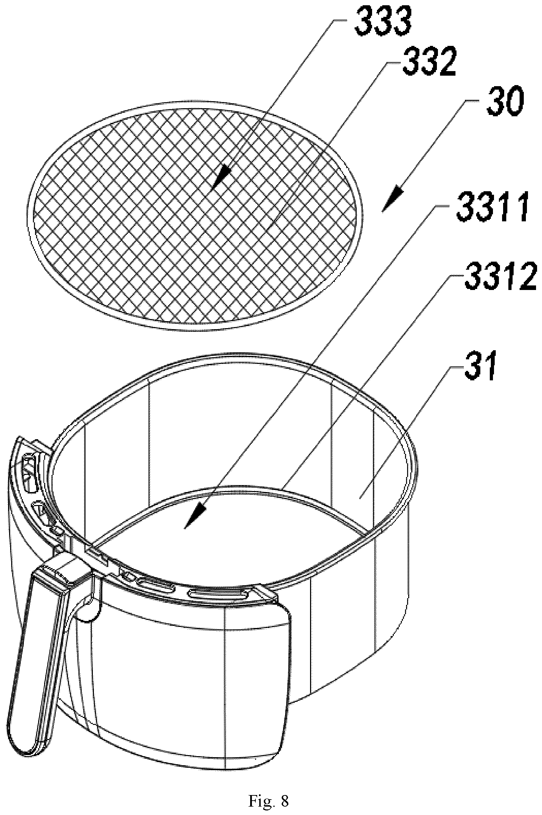

As shown in Fig. 7 and Fig. 8, the frying basket 31 includes a frying basket body 31 and a mesh plate 332 matching the frying basket body 31. A bottom of the frying basket body 31 has a bottom opening 3311, a mesh plate supporting structure 3312 is arranged on an inner side of the bottom opening 3311, the mesh plate 332 is detachably limited on the mesh plate supporting structure 3312, and the mesh plate 332 is provided with the plurality of mesh plate hot air holes 333. By detachably arranging the mesh plate 332 at the bottom of the frying basket body 31, disassembly, cleaning and replacing are facilitated, thereby improving use convenience of the user.

As shown in Fig. 7 and Fig. 8, a downward sunken heating groove 515 is formed in a bottom of the cooking chamber 11, and the second heating component 50 is adapted to be suspended in the heating groove 515. By suspending the second heating component 50 in the heating groove 515, not only can the second heating component 50 be hidden, thereby improving overall aesthetics, but also can dispersion of heat generated by the second heating component 50 be avoided, thereby better heating an airflow inside the heating groove 515 and effectively improving heating efficiency.

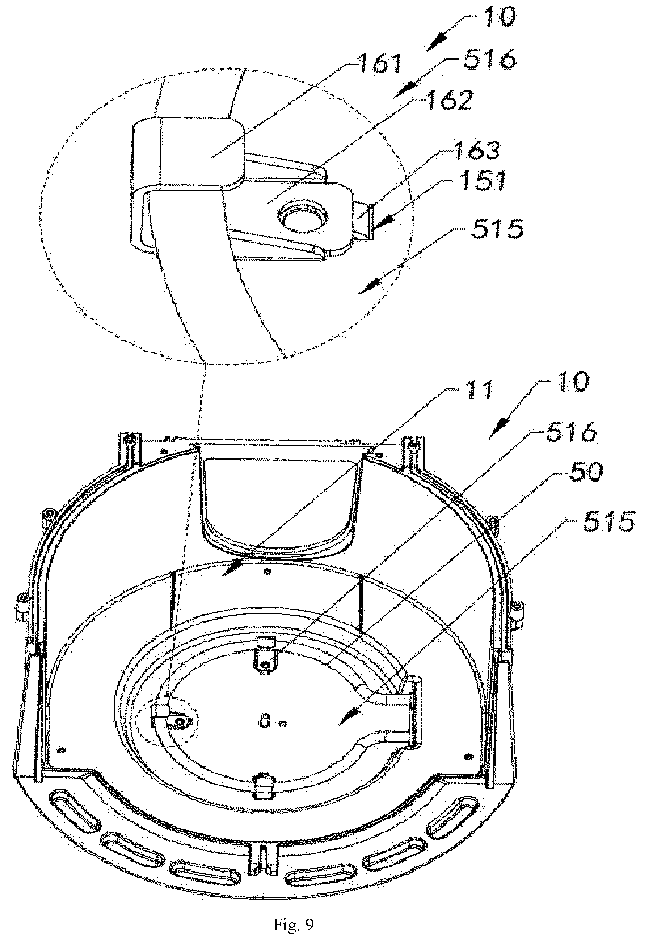

As shown in Fig. 9, a plurality of fixing elements 516 made of elastic high-temperature resistant materials such as high-temperature alloys and stainless steel are arranged in the heating groove 515 at intervals, one ends of the fixing elements 516 are provided with bending parts 161 for fixing the second heating component 50, the other ends of the fixing elements are provided with fixed parts 162 fixedly connected with a bottom wall of the heating groove 515 through fasteners, the fixed parts 162 are provided with a limiting part 163 extending towards the bottom wall of the heating groove 515, a limiting hole 151 matching the limiting part 163 is arranged on the bottom wall of the heating groove 515, and the limiting part 163 is adapted to extend into the limiting hole 151. By arranging the plurality of fixing elements 516 in the heating groove 515 to fix the second heating component 50, the air fryer can effectively improve the connection stability of the second heating component 50. At the same time, by fixing the fixing elements 516 with the fasteners and arranging the limiting part 163 on the fixed parts 162 of the fixing elements 516, not only can the fixing elements 516 be fixed, but also can the fixing elements 516 be limited, which can effectively improve the connection stability and structural reliability of the fixing elements 516.

As shown in Fig. 9, in an optional embodiment, a temperature sensor is arranged in the heating groove 515, the temperature sensor is preferably an NTC sensor, a fuse is arranged on an outer wall of the heating groove 515, and the fuse is adapted to be electrically connected with the temperature sensor and a control circuit of the machine body. By arranging the temperature sensor in the heating groove 515, a temperature at the bottom of the cooking chamber 11 can be monitored to avoid excessive temperature inside the cooking chamber 11. Meanwhile, by arranging the fuse on the outer wall of the heating groove 515, the control circuit of the air fryer can be automatically disconnected when the temperature sensor detects that the temperature inside the heating groove 515 is too high, thereby reducing the temperature inside the cooking chamber 11 and effectively improving the use safety and the cooking effect.

As shown in Fig. 7, the machine body 10 is internally provided with a heat dissipation duct 27 located on an outer side of the cooking chamber 11. Two ends of the heat dissipation duct 27 are adapted to communicate with the atmosphere. The heat dissipation duct 27 is internally provided with a heat dissipation fan system, the heat dissipation fan system is adapted to suck external cold air into the heat dissipation duct 27 to form a heat dissipation cold flow, thereby achieving heat dissipation of the machine body 10, and the outer wall of the heating groove 515 is at least partially located inside the heat dissipation duct 27. In the air fryer, by arranging the heat dissipation duct 27 on the outer side of the cooking chamber 11, heat dissipation of the machine body 10 can be achieved, which can not only avoid the excessive temperature of the machine body 10, but also can ensure the normal running of electrical devices inside the machine body 10, thereby effectively improving the use safety and performance reliability of an air fryer product. At the same time, at least part of the outer wall of the heating groove 515 is arranged in the heat dissipation duct 27, thus heat dissipation of the outer wall of the heating groove 515 can be achieved through the heat dissipation cold flow in the heat dissipation duct 27, the high temperature heat in the heating groove 515 is avoided from being transferred to an exterior of the heating groove 515 and affecting the normal running of other electrical devices outside the heating groove 515, and the performance stability of the air fryer can be effectively improved.

As shown in Fig. 9, in an optional embodiment, a side wall of the heating groove 515 is preferably of an arc-shaped flow guiding structure extending obliquely in a direction from a bottom to an outer side of a top. By arranging the side wall of the heating groove 515 as the arc-shaped flow guiding structure, the circulating heat flow in the hot air gap 13 can efficiently enter and exit the heating groove 515, and be heated by the second heating component 50, which can not only effectively improve circulation efficiency of the heat flow inside the cooking chamber 11, but also can effectively improve the cooking efficiency.

As shown in Fig. 7, a visible opening 15 is formed in the top of the cooking chamber 11, the visible opening 15 is internally provided with a visible window 16 for closing the visible opening 15, and the visible window 16 at least partially corresponds to the top opening of the frying basket 31. In the air fryer, the visible window 16 is preferably made of a high-temperature resistant transparent material such as high-temperature resistant transparent glass and high-temperature resistant transparent plastic. By arranging the visible opening 15 at the top of the cooking chamber 11 and arranging the visible window 16 used for closing the visible opening 15 and made of the high-temperature resistant transparent material at the visible opening 15, visibility of a situation inside the cooking chamber 11 can be achieved while closing the visible opening 15, so that the user can intuitively observe a cooking state of the food inside the cooking chamber 11 through the visible opening 15 and thus better cook the food, thereby effectively improving the cooking effect and the cooking experience.

As shown in Fig. 7, the first heating component 17 includes a heating tube 17, the heating tube 17 is preferably a light wave tube, and the heating tube 17 is preferably arranged surrounding an outer edge of the visible opening 15. By using the light wave tube as the heating tube 17, the heating tube 17 can illuminate an interior of the cooking chamber 11 while heating air inside the cooking chamber 11, thereby improving the visibility and a visible effect inside the cooking chamber 11. Meanwhile, by arranging the heating tube 17 surrounding the outer edge of the visible opening 15, light generated by the heating tube 17 will not interfere with the visibility of the visible opening 15, thereby effectively improving the visibility and the visible effect of the air fryer.

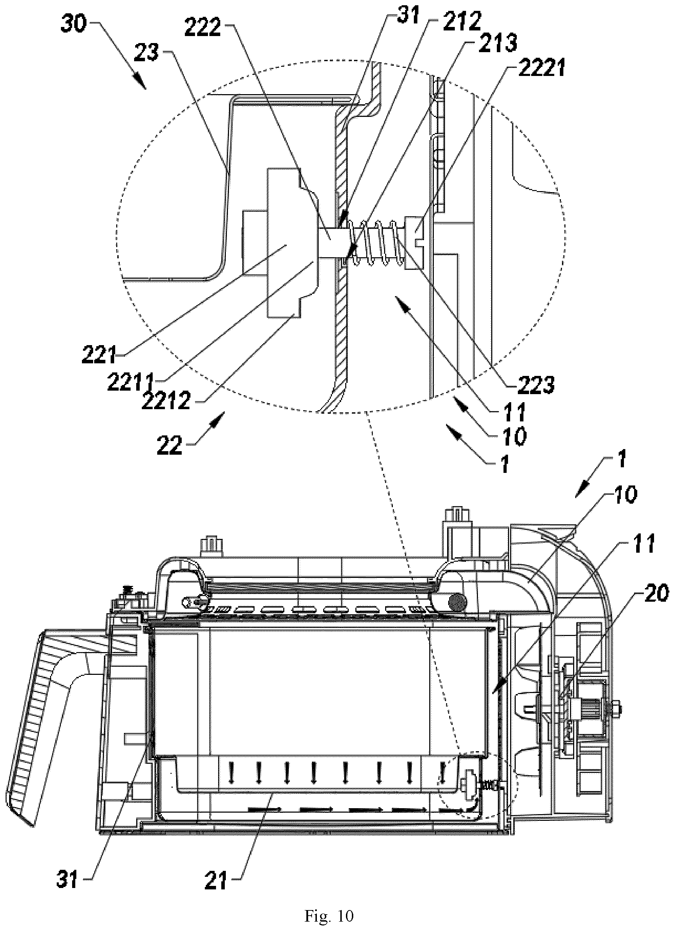

In a fourth aspect, Fig. 10 to Fig. 12 show schematic diagrams of a novel frying basket component 30 provided by the present application. The frying basket component 30 includes a frying basket 31 with a top opening and a blocking structure 22. A ventilation hole 211 for allowing an airflow to pass through is formed in a side portion of the frying basket 31, the blocking structure 22 is arranged at the ventilation hole 211, and the blocking structure 22 is adapted to be in movable fit with the ventilation hole 211. The blocking structure 22 has a stressed state and a non-stressed state, and when the blocking structure 22 is in the stressed state, the blocking structure 22 is adapted to open the ventilation hole 211; and when the blocking structure is in the non-stressed state, the blocking structure 22 is adapted to block the ventilation hole 211. In the frying basket component 30, by arranging the blocking structure 22 in movable fit with the ventilation hole 211 at the ventilation hole 211 of the frying basket 31 to control the opening and closing of the ventilation hole 211, not only can opening of the ventilation hole 211 be achieved for food cooking during use, but also can closing of the ventilation hole 211 be achieved after use to prevent grease, condensed water, etc. inside the frying basket 31 from flowing out into an external environment through the ventilation hole 211 and thus causing external environmental pollution, thereby effectively improving use convenience and use experience of a user.

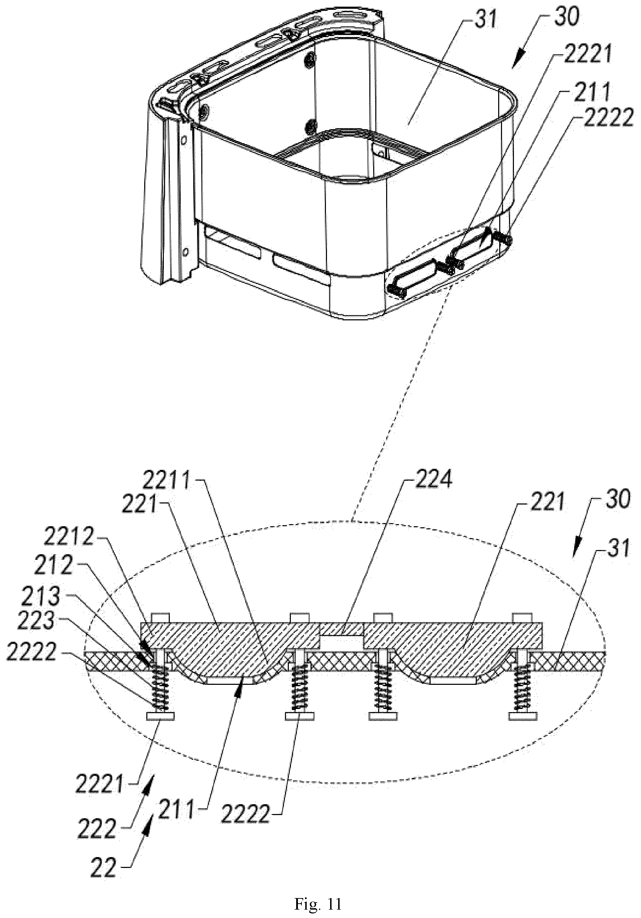

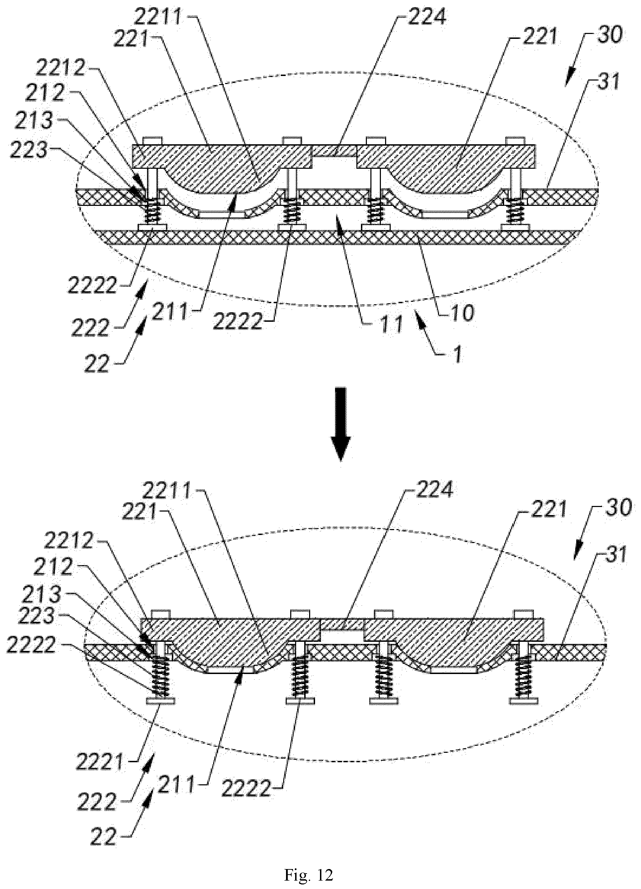

Specifically, as shown in Fig. 11 and Fig. 12, the blocking structure 22 includes a sealing element 221 arranged in the frying basket 31 and matching the ventilation hole 211, and a movable element 222 connected with the sealing element 221, an installation hole 212 matching the movable element 222 is formed in a side wall of the frying basket 31, and the movable element 222 is movably limited in the installation hole 212; one end of the movable element 222 is connected to the sealing element 221, the other end of the movable element is provided with an abutting part 2221 extending to an exterior of the frying basket 31, and a position between the abutting part 2221 and an outer wall of the frying basket 31 is sleeved with an elastic element 223 capable of being compressed and reset; when the blocking structure 22 is in the stressed state, the elastic element 223 is compressed, and the movable element 222 is adapted to drive the sealing element 221 to move towards an interior of the frying basket, so as to open the ventilation hole 211; and when the blocking structure 22 is in the non-stressed state, the movable element 222 is adapted to drive the sealing element 221 to move towards the exterior of the frying basket 31 under the action of the elastic element 223, so as to block the ventilation hole 211. By arranging the sealing element 221 in the frying basket 31, the frying basket component 30 can hide the sealing element 221, thereby improving the overall aesthetics of the frying basket. Meanwhile, by arranging the elastic element 223 between the abutting part 2221 of the movable element 222 and the side wall of the frying basket 31, the frying basket component 30 can achieve automatic resetting of the sealing element 221 to block the ventilation hole 211 when the blocking structure 22 changes from the stressed state to the non-stressed state, thereby improving the use convenience of the blocking structure 22 and the frying basket component 30.

In an optional embodiment, the sealing element 211 is preferably made of an elastic high-temperature resistant material such as silicone and rubber. By making the sealing element 221 using the elastic high-temperature resistant material such as the silicone and the rubber, the high temperature inside the frying basket 31 can be avoided from affecting performance of the sealing element 221, thereby ensuring the sealing performance of the sealing element 221 and structural reliability of the blocking structure 22.

As shown in Fig. 11 and Fig. 12, a sealing part 2211 matching the ventilation hole 211 is arranged on one side of the sealing element 221 facing the side wall of the frying basket 31, and when the blocking structure 22 is in the non-stressed state, the sealing part 2211 at least partially extends into the ventilation hole 211 and is in interference fit with an inner wall of the ventilation hole 211. By extending at least part of the sealing part 2211 into the ventilation hole 211 and making the sealing part in interference fit with the inner wall of the ventilation hole 211, not only can the stability of the connection between the sealing element 221 and the side wall of the frying basket 31 be effectively improved, but also the sealing effect of the sealing element 221 can be effectively improved, thereby ensuring the use experience of the user.

As shown in Fig. 11 and Fig. 12, in an optional embodiment, a side portion of the sealing part 2211 is preferably of an arc-shaped structure matching the ventilation hole 211. By arranging the side portion of the sealing part 2211 as the arc-shaped structure matching the ventilation hole 211, a contact area between the sealing part 2211 and the ventilation hole 211 can be effectively increased, thereby improving the sealing effect.

As shown in Fig. 11 and Fig. 12, in an optional embodiment, a limiting part 2212 is further arranged on an outer side of the sealing part 2211, the limiting part 2212 is preferably formed by outward extension of the sealing part 2211, and when the blocking structure 22 is in the non-stressed state, the limiting part 2212 is adapted to abut against the side wall of the frying basket 31 at an outer edge of the ventilation hole 211. The limiting part 2212 is adapted to play a limiting role, and by arranging the limiting part 2212 abutting against the side wall of the frying basket 31 on the outer side of the sealing part 2211, the sealing part 2211 can be prevented from disengaging from the ventilation hole 211 during sealing, thereby ensuring the performance stability and structural reliability of the blocking structure 22.

As shown in Fig. 10 to Fig. 12, an elastic element limiting groove 213 is formed in the outer wall of the frying basket 31, and the elastic element 223 is at least partially located within the elastic element limiting groove 213. The elastic element limiting groove 213 is adapted to play a role in limiting and/or positioning. Through the elastic element limiting groove 213, not only can the elastic element 223 be positioned during installation of the elastic element 223, thereby reducing the installation difficulty of the elastic element 223, but also can the elastic element 223 be limited, thereby avoiding situations of displacement and damage of the elastic element 223 during compression and resetting, and effectively ensuring the performance reliability and stability of the elastic element 223.

As shown in Fig. 11, in an optional embodiment, the movable element 222 includes a first movable element 2222 and a second movable element 2223, and the first movable element 2222 and the second movable element 2223 are adapted to be oppositely arranged on the two sides of the ventilation hole 221. By arranging the first movable element 2222 and the second movable element 2223 on two sides of the ventilation hole 211 respectively, the frying basket component 30 can not only increase the stability of the connection between the blocking structure 22 and the side wall of the frying basket 31, but also can make force applied to the sealing element when the sealing element 221 makes contact with the side wall of the frying basket 31 be more uniform, and the sealing performance can be better, thereby effectively improving the sealing stability and structural reliability of the blocking structure 22.

As shown in Fig. 11, the side wall of the frying basket 31 is provided with the plurality of ventilation holes 211, a connecting element 224 is arranged between the sealing elements 221 for blocking the two adjacent ventilation holes 211, and the connecting element 224 is adapted to connect the two adjacent sealing elements 221. By arranging the plurality of ventilation holes 211 in the frying basket 31, the frying basket component 30 can effectively increase an outflow speed of an airflow inside the frying basket 31, thereby improving airflow circulation efficiency. At the same time, by arranging the connecting element 224 between the two adjacent sealing elements 221 to connect the two adjacent sealing elements 221, not only can the operation difficulty during installation of the plurality of sealing elements 221 be reduced and the installation convenience be improved, but also synchronous movement of the plurality of sealing elements 221 can be achieved, thereby simultaneously opening or blocking the plurality of ventilation holes 211 and improving use convenience of the blocking structure 22. As shown in Fig. 10, the present application further provides an air fryer 1. The air fryer 1 includes a fryer body 10, a cooking chamber 11 arranged inside the fryer body 10 and having a side opening, and a hot air circulation system 20 communicating with the cooking chamber 11. The cooking chamber 11 is internally provided with the novel frying basket component 30 as described above that is able to be withdrawn through the front side opening, and the hot air circulation system 20 is adapted to generate a circulating heat flow and introduce the circulating heat flow into the cooking chamber 11 to cook food inside the cooking chamber 11. As shown in Fig. 10 and Fig. 12, in the air fryer 1, when the frying basket component 30 is arranged in the cooking chamber 11, an abutting part 2221 of a movable element 222 is adapted to abut against an inner side wall of the cooking chamber 11, a blocking structure 22 is adapted to be in a stressed state, and the movable element 222 is adapted to drive a sealing element 221 to move into a frying basket 31 under reacting force of the inner side wall of the cooking chamber 11, thereby opening a ventilation hole 211. When the frying basket component 30 is withdrawn from the cooking chamber 11, the abutting part 2221 of the movable element 222 separates from the inner side wall of the cooking chamber 11, the reacting force of the inner side wall of the cooking chamber 11 disappears, the blocking structure 22 is adapted to change from the stressed state into a non-stressed state, and the movable element 222 is adapted to drive the sealing element 221 to move towards an outer side of the frying basket 31 under the action of an elastic element 223, thereby blocking the ventilation hole 211. By detachably arranging the frying basket component 30 in the cooking chamber 11, the air fryer 1 can achieve opening and closing of the ventilation hole 211 by disassembling and installing the frying basket component 30, so as to open the ventilation hole 211 during cooking to allow hot air to pass through for cooking the food inside the frying basket 31. After cooking, when the frying basket component 30 is taken out, the ventilation hole 211 is automatically blocked to prevent grease, condensed water, etc. inside the frying basket 31 from flowing out to an external environment through the ventilation hole 211 and polluting the external environment, thereby improving the use convenience of an air fryer product and use experience of a user.

As shown in Fig. 10, the frying basket component 30 further includes a food tray 21 detachably suspended in the frying basket 31. The food tray 21 is provided with a plurality of through holes, and the ventilation hole 211 is adapted to be formed in a side wall of the frying basket 31 below the food tray 21. When the frying basket component 30 is arranged in the cooking chamber 11, the ventilation hole 211 is adapted to be in an open state, and a circulating heat flow in the cooking chamber 11 is adapted to enter the frying basket 31 from a top opening of the frying basket 31, pass through the through holes from an upper space of the food tray 21 to enter a lower space of the food tray, and then flow out of the frying basket 31 from the ventilation hole 211. By suspending the food tray 21 inside the frying basket 31 to enable the circulating heat flow inside the frying basket 31 pass through the food tray 21 and then flow out of the ventilation hole 211, the circulating heat flow can better heat the food inside the frying basket 31, thereby effectively improving a cooking effect.

It should be noted that the terms used here are only for describing the specific implementations, rather than limiting an exemplary implementation according to the present disclosure. As used here, unless clearly noted in the context, a singular form also intends to include a plural form. In addition, it should be understood that when terms "contain" and/or "include" are used in the present specification, it indicates that there are features, steps, operations, devices, components and/or their combinations.

Relative arrangement of components and steps, numerical expressions and numerical values set forth in these embodiments do not limit the scope of the present disclosure unless specifically stated otherwise. Meanwhile, it should be understood that, for the convenience of description, dimensions of various parts shown in the accompanying drawings are not drawn in an actual proportional relationship. Technologies, methods, and devices known to those of ordinary skill in the related art may not be discussed in detail, but where appropriate, such technologies, methods, and devices should be considered part of the authorized specification. In all the examples shown and discussed here, any specific value should be interpreted as merely illustrative and not restrictive. Therefore, other examples of exemplary embodiments may have different values. It should be noted that similar numerals and letters represent like items in the following accompanying drawings, therefore, once an item is defined in one accompanying drawing, it does not require further discussion in the subsequent accompanying drawings.

The above provides a detailed introduction to the food tray, the frying basket component and the air fryer provided by the present disclosure. Specific examples are applied in the text to explain principles and implementations of the present disclosure. The description of the above embodiments is merely used for helping understand the methods and core ideas of the present disclosure. Meanwhile, for those ordinarily skilled in the art, there may be changes in specific implementations and application scopes according to the ideas of the present disclosure. To sum up, the content of this specification is not to be understood as a limitation on the present disclosure.

### INDUSTRIAL APPLICABILITY

By arranging the hot air circulation system on the side portion of the cooking chamber to heat the food inside the frying basket in the manner of guiding the air out through the side portion, the present application can prevent the circulating heat flow generated by the hot air circulation system from being directly blown into the frying basket and resulting in the situations such as food burning. At the same time, by arranging the ventilation hole in the side wall of the frying basket below the food tray, the circulating heat flow entering the frying basket penetrates through the food tray and then flows out of the ventilation hole, which can not only make the food on the food tray more evenly heated, but also can heat the upper and lower surfaces of the food on the food tray, thereby avoiding the flipping operation and effectively improving the cooking efficiency and the cooking effect.

## Claims

1. An air fryer with air suction on a side portion, comprising a machine body, a cooking chamber arranged in the machine body and a frying basket arranged in the cooking chamber and having a top opening, **characterized in that** a hot air chamber is formed in a side portion of the cooking chamber, the hot air chamber is internally provided with a hot air circulation system for generating a circulating heat flow, an air suction hole corresponding to the hot air circulation system is formed in a middle of a side wall of one side of the cooking chamber adjacent to the hot air circulation system, and an air outlet communicating with the hot air chamber is formed in an upper portion of the side wall of one side of the cooking chamber adjacent to the hot air circulation system; and a food tray with a through hole is suspended in the frying basket, a ventilation hole is formed in a side wall of the frying basket below the food tray, a hot air gap is formed between the frying basket and an inner wall of the cooking chamber, and the circulating heat flow generated by the hot air circulation system flows out of the air outlet and then is adapted to enter the frying basket from the top opening of the frying basket, penetrates through the food tray from an upper space of the food tray to enter a lower space of the food tray and then flows out of the ventilation hole, and flows back to the hot air chamber through the hot air gap and the air suction hole.

2. The air fryer with the air suction on the side portion according to claim 1, **characterized in that** a downward sunken accommodating groove is formed in a middle of the food tray, a side portion of the accommodating groove is of a closed structure, a plurality of through holes are formed in a bottom of the accommodating groove, and the ventilation hole in the side wall of the frying basket at least partially corresponds to the side portion of the accommodating groove of the food tray.

3. The air fryer with the air suction on the side portion according to claim 1, **characterized in that** a downward sunken accommodating groove is formed in a middle of the food tray, a flow guiding part sunken into the frying basket and corresponding to the accommodating groove is arranged at a bottom of the frying basket, and the flow guiding part is adapted to extend in a direction from a middle of a bottom wall of the frying basket to an edge.

4. The air fryer with the air suction on the side portion according to any one of claims 1-3, **characterized in that** a supporting structure matching the food tray is arranged on an inner side wall of the frying basket, and the food tray is adapted to be detachably suspended in the frying basket through the supporting structure.

5. The air fryer with the air suction on the side portion according to claim 1, **characterized in that** a blocking structure in movable fit with the ventilation hole is arranged at the ventilation hole, the blocking structure has a stressed state and a non-stressed state, and when the blocking structure is in the stressed state, the blocking structure is adapted to open the ventilation hole; and when the blocking structure is in the non-stressed state, the blocking structure is adapted to block the ventilation hole.

6. The air fryer with the air suction on the side portion according to claim 5, **characterized in that** the blocking structure comprises a sealing element arranged in the frying basket and matching the ventilation hole, and a movable element connected with the sealing element, an installation hole matching the movable element is formed in the side wall of the frying basket, and the movable element is movably limited in the installation hole; one end of the movable element is connected to the sealing element, the other end of the movable element is provided with an abutting part extending to an exterior of the frying basket, and a position between the abutting part and an outer wall of the frying basket is sleeved with an elastic element; when the blocking structure is in the stressed state, the elastic element is compressed, and the movable element is adapted to drive the sealing element to move towards an interior of the frying basket, so as to open the ventilation hole; and when the blocking structure is in the non-stressed state, the movable element is adapted to drive the sealing element to move towards the exterior of the frying basket under the action of the elastic element, so as to block the ventilation hole.

7. The air fryer with the air suction on the side portion according to claim 1, **characterized in that** the frying basket comprises:
a food tray, having an accommodating chamber with a top opening, wherein the through hole is formed in a bottom of the accommodating chamber; and
an outer pot component, comprising a door baffle and an oil receiving tray arranged at a bottom of the door baffle and fixedly connected with the door baffle, the food tray is detachably arranged on the door baffle, a lower portion of the food tray extends into the oil receiving tray, an airflow channel for allowing an airflow to pass through is formed between an outer wall of the food tray and an inner wall of the oil receiving tray, two ends of the airflow channel are adapted to communicate with the through hole and an outer space of the frying basket respectively, and the airflow channel communicates with an opening of the outer space of the frying basket to form the ventilation hole.

8. The air fryer with the air suction on the side portion according to claim 7, **characterized in that** a side wall of the food tray is of a closed structure, a sunken part formed by sinking into the accommodating chamber is arranged on a lower portion of the side wall of the food tray, and the sunken part extends into the oil receiving tray to form the airflow channel with the inner wall of the oil receiving tray.

9. The air fryer with the air suction on the side portion according to claim 7, **characterized in that** a handle extending towards an outer side is arranged at a top of the food tray, the handle is further provided with a limiting part, the door baffle is provided with a limiting groove matching the limiting part, and the food tray is adapted to be detachably arranged on the door baffle through the limiting part and the limiting groove.

10. The air fryer with the air suction on the side portion according to any one of claims 7-9, **characterized in that** a supporting part protruding upward is arranged at a bottom of the inner wall of the oil receiving tray, the supporting part is adapted to abut against a bottom of the food tray, a protruding part extending downward and corresponding to the supporting part is arranged at the bottom of the food tray, the food tray is adapted to abut against the supporting part through the protruding part, a protective pad made of an elastic high-temperature resistant material is arranged on one or both of the supporting part and the protruding part, the supporting part is adapted to abut against the protruding part through the protective pad, a handle extending towards an outer side is arranged at a top of the food tray, the door baffle is provided with a receding groove to accommodate the handle, the supporting part is arranged at one end of the oil receiving tray away from the receding groove, and a connection line between at least one point in the receding groove and at least one point on the supporting part passes through a center line at a bottom of the oil receiving tray.

11. The air fryer with the air suction on the side portion according to any one of claims 1-10, **characterized in that** a first heating component is arranged above the frying basket, and an airflow in the air outlet enters the cooking chamber and then is adapted to be heated by the first heating component and flow into the frying basket through the top opening of the frying basket; and a second heating component is arranged below the frying basket, and the second heating component is arranged in the hot air gap.

12. The air fryer with the air suction on the side portion according to claim 11, **characterized in that** an annular air guiding chamber sunken upward and having a downward opening is formed in a top of the cooking chamber, the air guiding chamber is adapted to communicate with the air outlet, the top opening of the frying basket is at least partially located under the air guiding chamber, and the first heating component is arranged in the air guiding chamber surrounding an inner wall of the air guiding chamber.

13. The air fryer with the air suction on the side portion according to claim 11, **characterized in that** a downward sunken heating groove is formed in a bottom of the cooking chamber, the second heating component is suspended in the heating groove, a plurality of fixing elements made of elastic high-temperature resistant materials are arranged in the heating groove at intervals, one ends of the fixing elements are provided with bending parts for fixing the second heating component, the other ends of the fixing elements are provided with fixed parts fixedly connected with a bottom wall of the heating groove through fasteners, the fixed parts are provided with a limiting part extending towards the bottom wall of the heating groove, a limiting hole matching the limiting part is arranged on the bottom wall of the heating groove, the limiting part is adapted to extend into the limiting hole, and a side wall of the heating groove is of an arc-shaped flow guiding structure extending obliquely in a direction from a bottom to an outer side of a top.

14. The air fryer with the air suction on the side portion according to any one of claims 1-13, **characterized in that** an air suction plate is arranged on the side wall of one side of the cooking chamber adjacent to the hot air circulation system, a plurality of open pores are dispersed on the air suction plate to form the air suction hole, and the air suction hole at least partially corresponds to the ventilation hole in the side wall of the frying basket.

15. The air fryer with the air suction on the side portion according to any one of claims 1-14, **characterized in that** a visible opening communicating with the cooking chamber is formed in a top of the machine body, the visible opening is internally provided with a visible window, and the visible window at least partially corresponds to the top opening of the frying basket; and a heating tube is arranged on the top of the cooking chamber, the heating tube is a light wave tube, and the heating tube is adapted to be arranged surrounding an outer edge of the visible opening.
